# EUROPEAN PATENT APPLICATION

(11) **EP 4 414 485 A1**
(43) Date of publication of application: **14.08.2024**
(21) Application number: 22878562.2
(22) Date of filing: 05.10.2022
(51) Int. Cl.: D01F 1/10, C01G 41/00, C09K 3/00, D06M 11/48

(54) **INFRARED ABSORBING FIBER AND FIBER PRODUCT**

(30) Priority: 07.10.2021 JP 2021165319
(71) Applicant: SUMITOMO METAL MINING CO., LTD., Tokyo 105-8716 (JP)
(72) Inventor: IGARI, Atsushi, Isa-shi, Kagoshima 895-2501 (JP); CHONAN, Takeshi, Isa-shi, Kagoshima 895-2501 (JP)
(74) Representative: Jones, Nicholas Andrew
(86) International application number: PCT/JP2022/037320
(87) International publication number: WO 2023/058694

(57) **Abstract**

An infrared absorbing fiber includes: a fiber; and organic-inorganic hybrid infrared absorbing particles, wherein the organic-inorganic hybrid infrared absorbing particles include infrared absorbing particles and a coating resin that covers at least a part of a surface of the infrared absorbing particles, a content of the infrared absorbing particles in the organic-inorganic hybrid infrared absorbing particles is 15 mass% or more and 55 mass% or less, and the organic-inorganic hybrid infrared absorbing particles are located in one or more parts selected from an interior of the fiber and a surface of the fiber.

## Description

### TECHNICAL FIELD

The present invention relates to an infrared absorbing fiber and a fiber product.

### BACKGROUND ART

A variety of cold-weather clothing, interior goods, and leisure goods with enhanced heat retention effect have been devised and put into practical use. There are roughly two main methods for increasing the heat retention effect that have been put into practical use.

The first method is to maintain heat retention by reducing the dissipation of heat generated from the human body. Specifically, for example, methods have been adopted to physically increase the air layer in the cold-weather clothing by controlling the weaving and knitting structure of the cold-weather clothing or by making the fibers used hollow or porous.

The second method is to improve heat retention by storing heat through active methods such as radiating the heat generated by the human body back toward the human body or converting some of the sunlight received by the cold-weather clothing into heat. Specifically, in the cold-weather clothing, for example, methods have been adopted in which the entire clothing or the fibers that make up the cold-weather clothing are subjected to chemical and physical processing.

As described above, the first method was to increase the air layer in clothing, make the fabric thicker, make the mesh finer, or make the color darker. Specific examples include clothing used in winter, such as sweaters, and clothing often used for winter sports, such as clothing in which a batting is inserted between the outer material and the lining, and heat retention is maintained due to the thickness of the air layer in the batting. However, when the air layer is increased by adding the batting or the like, the clothing becomes heavy and bulky, causing problems for sportswear, which requires ease of movement. In order to solve this problem, in recent years, the second method described above, which actively utilizes internally generated heat or heat from outside, has been adopted.

As one method of implementing the second method, a method is known in which metals such as aluminum or titanium are deposited on the lining or the like of clothing to reflect radiant heat emitted from the body on the metal-deposited surface, thereby actively preventing heat dissipation. However, in such a method, not only a considerable cost is required for depositing the metal onto clothing, but also the yield deteriorates due to uneven deposition or the like, resulting in an increase in the price of the product itself.

As another method of implementing the second method, a method in which ceramic particles such as alumina, zirconia, and magnesia are kneaded into the fiber itself, utilizing the far-infrared radiation effect and the effect of converting light into heat of the ceramic particles, that is, a method of actively incorporating external energy, has been proposed.

For example, Patent Document 1 discloses a heat-radiation fiber that contains one or more types of inorganic fine particles containing at least one type of metal or metal ion having a thermal conductivity of 0.3 kcal/m²·sec·°C or more and having heat radiation characteristics. As the inorganic fine particles having a heat-radiation characteristics, silica or barium sulfate are mentioned.

Patent Document 2 discloses a heat retention composite fiber consisting of a thermoplastic polymer A having a melting point of 110°C or more and a thermoplastic polymer B having a melting point of 15 to 50°C, a temperature-lowering crystallization temperature of 40°C or less, and a crystallization heat of 10 mJ/mg or more. The heat retention composite fiber includes ceramic fine particles having a far-infrared radiation ability of 0.1 to 20 wt% with respect to the weight of the fiber, and the polymer A covers the surface of the fiber.

Patent Document 3 discloses an infrared absorbing processed fiber product in which a binder resin containing an infrared absorbing agent consisting of at least one kind of predetermined amino compound is dispersed and adhered to the fiber product.

Patent Document 4 discloses a near-infrared absorbing processing method for a cellulose fiber structure in which, by dyeing with a combination of a dye that absorbs more in the near-infrared region than a black dye and other dyes, a spectral reflectance of a fabric is 65% or less within a range of 750 to 1,500 nm as a degree of near-infrared absorption.

In Patent Documents 5, 6, and 7, the applicant of the present invention has proposed fibers containing boride fine particles, tungsten oxide fine particles, or composite tungsten oxide fine particles, and fiber products obtained by processing the fibers.

According to an investigation by the inventors of the present invention, infrared absorbing particles such as tungsten oxide fine particles do not have a sufficient chemical resistance. Because of this, there have been cases in which the infrared absorbing fibers or the fiber products exhibit degraded infrared absorbing characteristics when exposed to a chemical environment such as high temperature acid or alkali.

Therefore, the inventors of the present invention have proposed an infrared absorbing fiber having chemical resistance in Patent Document 8.

### RELATED-ART DOCUMENT

### Patent Document

Patent Document 1: Japanese Laid-Open Patent Publication No. H11-279830
Patent Document 2: Japanese Laid-Open Patent Publication No. H5-239716
Patent Document 3: Japanese Laid-Open Patent Publication No. H8-3870
Patent Document 4: Japanese Laid-Open Patent Publication No. H9-291463
Patent Document 5: Japanese Laid-Open Patent Publication No. 2005-9024
Patent Document 6: Japanese Laid-Open Patent Publication No. 2006-132042
Patent Document 7: International Publication No. WO 2019/054476
Patent Document 8: Japanese Laid-Open Patent Publication No. 2021-75825

### SUMMARY OF THE INVENTION

### Technical Problem

However, there is a demand for infrared absorbing fibers that have chemical resistance and even higher infrared absorbing characteristics.

One aspect of the present invention is to provide an infrared absorbing fiber having both chemical resistance and excellent infrared absorbing characteristics.

### Solution to Problem

According to one aspect of the present invention, an infrared absorbing fiber including: a fiber; and organic-inorganic hybrid infrared absorbing particles, is provided. The organic-inorganic hybrid infrared absorbing particles include infrared absorbing particles and a coating resin that covers at least a part of a surface of the infrared absorbing particles. A content of the infrared absorbing particles in the organic-inorganic hybrid infrared absorbing particles is 15 mass% or more and 55 mass% or less. The organic-inorganic hybrid infrared absorbing particles are located in one or more parts selected from an interior of the fiber and a surface of the fiber.

### Advantageous Effects of Invention

According to one aspect of the present invention, an infrared absorbing fiber having both chemical resistance and excellent infrared absorbing characteristics can be provided.

### BRIEF DESCRIPTION OF THE DRAWINGS

[FIG. 1]

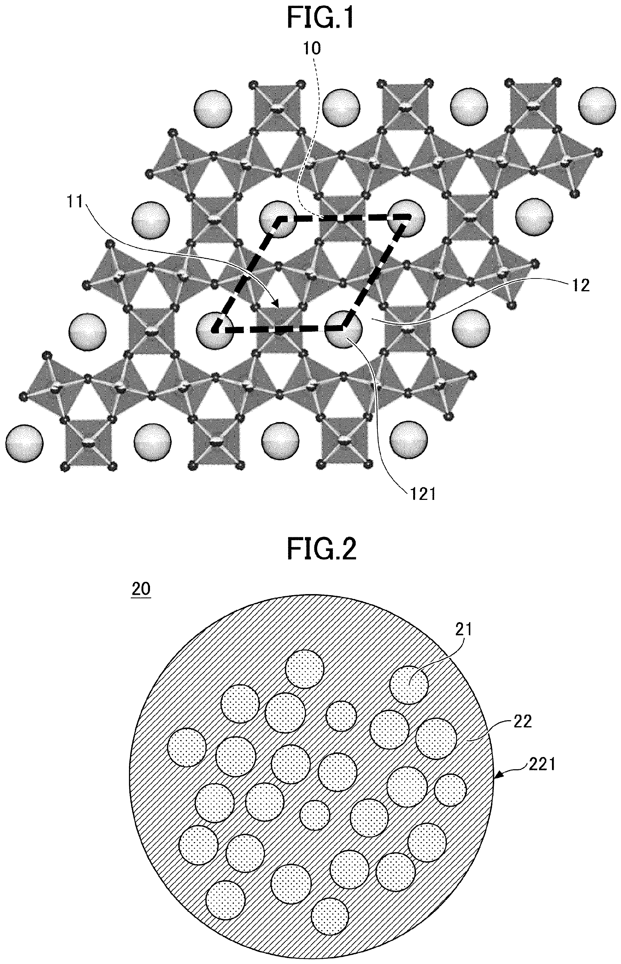

   FIG. 1 is a schematic diagram of a crystal structure of a composite tungsten oxide having a hexagonal crystal.
[FIG. 2]
   FIG. 2 is a cross-sectional schematic diagram of organic-inorganic hybrid infrared absorbing particles.
[FIG. 3]

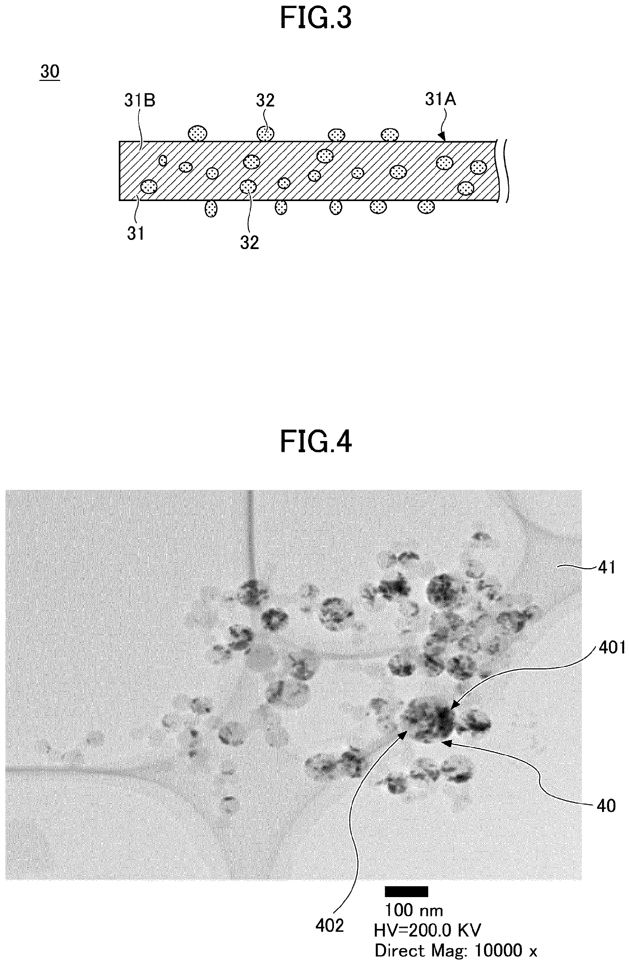

   FIG. 3 is a cross-sectional schematic diagram of an infrared absorbing fiber.
[FIG. 4]
   FIG. 4 is a transmission electron micrograph of organic-inorganic hybrid infrared absorbing particles obtained in Example 1.

### DESCRIPTION OF EMBODIMENTS

Hereinafter, the embodiments for carrying out the invention will be described with reference to the drawings, but the invention is not limited to the following embodiments, and various modifications and substitutions can be made to the following embodiments without departing from the scope of the invention.

### [Infrared Absorbing Fiber]

In the present embodiment, a configuration example of an infrared absorbing fiber will be described.

The infrared absorbing fiber according to the present embodiment may include a fiber and organic-inorganic hybrid infrared absorbing particles.

The organic-inorganic hybrid infrared absorbing particles may include infrared absorbing particles and a coating resin that covers at least a part of a surface of the infrared absorbing particles. A content of the infrared absorbing particles in the organic-inorganic hybrid infrared absorbing particles may be 15 mass% or more and 55 mass% or less.

The organic-inorganic hybrid infrared absorbing particles may be located in one or more parts selected from an interior of the fiber and a surface of the fiber.

As described above, in some cases, the infrared absorbing particles such as tungsten oxide fine particles used in the infrared absorbing fiber or the like do not have a sufficient chemical resistance.

Therefore, the inventors of the present invention have conducted intensive studies on a method of producing infrared absorbing particles having both chemical resistance and excellent infrared absorbing characteristics.

As a result, they have focused on disposing an organic material such as resin directly on at least a part of the surface of the infrared absorbing particles to produce organic-inorganic hybrid infrared absorbing particles. Further, it was found that chemical resistance and excellent infrared absorbing characteristics can be exhibited when the content of the infrared absorbing particles in the organic-inorganic hybrid infrared absorbing particles is 15 mass% or more and 55 mass% or less, which has been particularly difficult to achieve in the conventional technique, and the infrared absorbing fiber contains the organic-inorganic hybrid infrared absorbing particles.

The infrared absorbing particles are typically an inorganic material, and it has been difficult to place an organic material such as resin on at least a part of the surface of the infrared absorbing particles. For this reason, the organic-inorganic hybrid infrared absorbing particles and the method of producing the organic-inorganic hybrid infrared absorbing particles were not known. In particular, the method of producing the organic-inorganic hybrid infrared absorbing particles having a high content of the infrared absorbing particles as described above was not known. Therefore, the inventors of the present invention conducted studies and found organic-inorganic hybrid infrared absorbing particles having a high content of the infrared absorbing particles, in which an organic material is placed on at least a part of the surface of the infrared absorbing particles, and a method of producing the organic-inorganic hybrid infrared absorbing particles.

The inventors found that by using the organic-inorganic hybrid infrared absorbing particles, it is possible to obtain the infrared absorbing fiber having chemical resistance and excellent infrared absorbing characteristics, and completed the present invention.

First, a method of producing the organic-inorganic hybrid infrared absorbing particles and the organic-inorganic hybrid infrared absorbing particles will be described.

### 1. Method of Producing Organic-Inorganic Hybrid Infrared Absorbing Particles

The infrared absorbing fiber according to the present embodiment may include organic-inorganic hybrid infrared absorbing particles as described above. The method of producing the organic-inorganic hybrid infrared absorbing particles may include, for example, the following processes.

A dispersion liquid preparation process of preparing a dispersion liquid containing infrared absorbing particles, a dispersant, and a dispersion medium.

A dispersion medium reduction process of evaporating the dispersion medium from the dispersion liquid.

A raw material mixture liquid preparation process of mixing the infrared absorbing particles collected after the dispersion medium reduction process, a coating resin material, an organic solvent, an emulsifier, water, and a polymerization initiator, to prepare a raw material mixture liquid.

A stirring process of stirring the raw material mixture liquid while cooling.

A polymerization process of performing, after a deoxygenation treatment to reduce oxygen amount in the raw material mixture liquid, polymerization reaction of the coating resin material.

Each process will be described below.

### (1) Dispersion Liquid Preparation Process

In the dispersion liquid preparation process, a dispersion liquid containing infrared absorbing particles, a dispersant, and a dispersion medium may be prepared.

Each of the materials that can be suitably used in preparing the dispersion liquid in the dispersion liquid preparation process will be described below.

### (a) Infrared Absorbing Particles

### (Composition and the like)

In the dispersion liquid preparation process, as the infrared absorbing particles, various infrared absorbing particles that are required to have improved chemical resistance, for example, acid resistance and alkaline resistance, may be used. As the infrared absorbing particles, for example, infrared absorbing particles containing various materials containing free electrons can be preferably used, and infrared absorbing particles containing various inorganic materials containing free electrons can be more preferably used.

As the infrared absorbing particles, infrared absorbing particles containing one or more oxides selected from tungsten oxide having oxygen deficiency and composite tungsten oxide can be particularly preferably used. When the tungsten oxide having oxygen deficiency and the composite tungsten oxide are used as the infrared absorbing particles, organic-inorganic hybrid infrared absorbing particles containing the infrared absorbing particles can be made light in color to make them less noticeable. In this case, it is preferable that the infrared absorbing particles contain one or more oxides selected from, for example, tungsten oxide represented by the general formula W_{y}O_{z} (W: tungsten, O: oxygen, 2.2≤z/y≤2.999) and composite tungsten oxide represented by the general formula MₓW_{y}O_{z} (the element M is one or more selected from H, He, Li, Na, K, Rb, Cs, Fr, Be, Mg, Ca, Sr, Ba, Ra, Sc, Y, La, Ce, Pr, Nd, Pm, Sm, Eu, Gd, Tb, Dy, Ho, Er, Tm, Yb, Lu, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Hf, Os, Bi, and I; 0.001≤x/y≤ 1; and 2.0≤z/y<4.0).

Typically, it is known that materials containing free electrons exhibit a reflection absorption response to electromagnetic waves around the region of wavelength of 200 nm to 2,600 nm of sunlight by plasma vibration. Therefore, as described above, various materials containing free electrons can be suitably used as infrared absorbing particles. The infrared absorbing particles are preferably smaller than, for example, the wavelength of light. Accordingly, the geometric scattering in the visible light region (wavelength 380 nm to 780 nm) can be reduced, and particularly high transparency in the visible light region can be obtained.

In the present specification, the term "transparency" is used in the sense of "low scattering and high transmittance with respect to light in the visible light region".

Typically, because effective free electrons are not present in tungsten oxide (WO₃), the absorption reflection characteristics in the infrared region are low, and thus it is not effective as infrared absorbing particles.

In contrast, WO₃ having oxygen deficiency and the composite tungsten oxide in which positive elements such as Na are added to WO₃ are known to be conductive materials and materials with free electrons. Analysis of the single crystal of these materials having free electrons suggests a response of free electrons to light in the infrared region.

According to an investigation by the inventors of the present invention, it is possible obtain a tungsten oxide or a composite tungsten oxide having a particularly effective range as an infrared absorbing material in a specific part of the composition range of tungsten and oxygen, transparent in the visible light region, and having particularly strong absorption in the infrared region.

Therefore, the tungsten oxide and the composite tungsten oxide, which are a kind of materials for the infrared absorbing particles that can be suitably used in the dispersion liquid preparation process, will be further described below.

### (a1) Tungsten Oxide

The tungsten oxide is represented by the general formula W_{y}O_{z} (where W is tungsten, O is oxygen, 2.2≤z/y≤2.999).

In the tungsten oxide represented by the general formula W_{y}O_{z}, the composition range of tungsten and oxygen is preferably less than 3 in the composition ratio (z/y) of oxygen to tungsten, and more preferably 2.2≤z/y≤2.999. In particular, it is further preferably 2.45≤z/y≤2.999.

When the value of z/y is 2.2 or more, the formation of a crystal phase of WO₂ in the tungsten oxide, which is undesirable, can be avoided, and chemical stability as a material can be achieved. Therefore, particularly effective infrared absorbing particles can be obtained.

Further, the value of z/y is preferably less than 3, and more preferably 2.999 or less. Accordingly, a particularly sufficient amount of free electrons can be generated in order to enhance the absorption reflection characteristics in the infrared region, and efficient infrared absorbing particles can be obtained.

In addition, the oxides having a composition ratio represented by 2.45≤z/y≤2.999, the "Magnéli phases", are chemically stable and have excellent light absorption characteristics in the near-infrared region. Accordingly, the oxides can be more preferably used as the infrared absorbing material. Therefore, it is more preferable that the z/y satisfies 2.45≤z/y≤2.999, as described above.

### (a2) Composite Tungsten Oxide

The composite tungsten oxide is obtained by adding the element M to the WO₃ described above.

By adding the element M to make the composite tungsten oxide, free electrons are generated in the WO₃, and strong absorption characteristics derived from the free electrons appear especially in the near-infrared region. Therefore, the composite tungsten oxide becomes effective as near-infrared absorbing particles around a wavelength of 1,000 nm.

That is, by making the composite tungsten oxide in which the oxygen amount is controlled and the element M that generates free electrons is added with respect to the WO₃, the infrared absorbing characteristics with higher efficiency can be exhibited. When the general formula of the composite tungsten oxide in which the oxygen amount is controlled and the element M that generates free electrons is added with respect to the WO₃ is described as MₓW_{y}O_{z}, it is preferable that the relations 0.001≤x/y≤1 and 2.0≤z/y<4.0 are satisfied. In the above general formula, M denotes the element M, W denotes tungsten, and O denotes oxygen.

As described above, when the value of x/y, which indicates the added amount of the element M, is 0.001 or more, a particularly sufficient amount of free electrons is generated in the composite tungsten oxide, and a high infrared absorbing effect can be obtained. The larger the added amount of the element M, the higher the supply amount of the free electrons and the higher the infrared absorbing efficiency, but the effect is also saturated at a value of x/y of approximately 1. When the value of x/y is 1 or less, it is preferable because the formation of an impurity phase in the infrared absorbing particle containing the composite tungsten oxide can be avoided.

The element M is preferably one or more kinds selected from H, He, Li, Na, K, Rb, Cs, Fr, Be, Mg, Ca, Sr, Ba, Ra, Sc, Y, La, Ce, Pr, Nd, Pm, Sm, Eu, Gd, Tb, Dy, Ho, Er, Tm, Yb, Lu, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Hf, Os, Bi, and I.

From the viewpoint of particularly enhancing the stability of MₓW_{y}O_{z}, the element M is more preferably one or more elements selected from Li, Na, K, Rb, Cs, Fr, Mg, Ca, Sr, Ba, Ra, Sc, Y, La, Ce, Pr, Nd, Pm, Sm, Eu, Gd, Tb, Dy, Ho, Er, Tm, Yb, Lu, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, and Re. From the viewpoint of improving the optical characteristics and weathering resistance of the infrared absorbing particles containing the composite tungsten oxide, the element M is more preferably one or more elements selected from alkali metals, alkaline earth metal elements, transition metal elements, group 4B elements, and group 5B elements.

With regard to the value of z/y indicating the added amount of oxygen, the composite tungsten oxide represented by MₓW_{y}O_{z} has the same mechanism as the tungsten oxide represented by W_{y}O_{z} described above, and in addition, free electrons are supplied by the added amount of the element M described above, even at z/y=3.0 or when the added amount of oxygen exceeds 3.0. Therefore, 2.0≤z/y<4.0 is preferable, 2.2≤z/y<4.0 is more preferable, and 2.45≤z/y<4.0 is further preferable.

In particular, when the composite tungsten oxide has a hexagonal crystal structure, the transmittance of light in the visible light region is improved and the absorption of light in the infrared region is improved for the infrared absorbing particles including the composite tungsten oxide. The description will be made with reference to FIG. 1, which is a schematic plan view of the hexagonal crystal structure.

FIG. 1 illustrates a projection view of the crystal structure of the composite tungsten oxide having the hexagonal crystal structure when viewed from the (001) direction, and a unit cell 10 is indicated by a dotted line.

In FIG. 1, six octahedra 11 formed of WO₆ units are assembled to form a hexagonal void 12, and an element 121, which is the element M, is placed in the void 12 to form a single unit, and a large number of these single units are assembled to form a hexagonal crystal structure.

In order to improve the transmittance of light in the visible light region and the absorption of light in the infrared region, the composite tungsten oxide only needs to contain the unit structure described with reference to FIG. 1. Therefore, the composite tungsten oxide may be crystalline or amorphous.

When a cation of the element M is added to the hexagonal void, the transmittance of light in the visible light region is improved and the absorption of light in the infrared region is improved. Typically, when the element M having a large ionic radius is added, the hexagonal crystal is likely to be formed. Specifically, when one or more elements selected from Cs, K, Rb, Tl, In, Ba, Li, Ca, Sr, Fe, and Sn are added as the element M, the hexagonal crystal is likely to be formed. Of course, other elements can be used as long as the above-mentioned element M is present in the hexagonal void formed by the WO₆ units, and the elements that can be used are not limited to the above-mentioned elements.

Because the composite tungsten oxide having the hexagonal crystal structure has a uniform crystal structure, the added amount of the element M is preferably 0.2 or more and 0.5 or less in the value of x/y in the aforementioned general formula, and further preferably 0.33. When the value of x/y is 0.33, it is considered that the above-mentioned element M is placed in all of the hexagonal voids.

In addition, infrared absorbing particles including tetragonal and cubic composite tungsten oxides other than hexagonal composite tungsten oxides also have sufficiently effective infrared absorbing characteristics. Depending on the crystal structure, the absorption position in the infrared region tends to change, and the absorption position tends to move to the longer wavelength in the order of cubic<tetragonal<hexagonal. Correspondingly, the absorption of light in the visible region is less in the order of hexagonal, tetragonal and cubic. Therefore, it is preferable to use hexagonal composite tungsten oxide for applications that transmit more light in the visible region and shield more light in the infrared region. However, the tendencies in optical characteristics described here are only rough tendencies and vary depending on the type of the added element, the added amount, and the oxygen amount, and the present invention is not limited thereto.

Because the infrared absorbing particles containing the tungsten oxide or the composite tungsten oxide largely absorb light in the near-infrared region, particularly around a wavelength of 1,000 nm, their transmitted color tone often ranges from blue to green.

### (Dispersion Particle Size)

The dispersion particle size of the infrared absorbing particles is not particularly limited and may be selected according to the purpose of use, and the like.

First, in a case of use in applications where transparency is desired, the infrared absorbing particles preferably have the dispersion particle size of 800 nm or less. This is because particles with the dispersion particle size of 800 nm or less do not completely shield light due to scattering, maintain visibility in the visible light region, and at the same time can efficiently maintain transparency. In particular, when transparency in the visible light region is emphasized, it is preferable to further consider reducing scattering by particles.

When reducing the scattering by the particles is emphasized, the dispersion particle size is preferably 200 nm or less, and more preferably 100 nm or less. When the dispersion particle size of the particles is small, scattering of light in the visible light region having a wavelength of 380 nm or more and 780 nm or less due to geometric scattering or Mie scattering is reduced. As a result, for example, it is possible to prevent the infrared absorbing film dispersed with infrared absorbing particles from becoming like frosted glass and not achieving clear transparency. That is, when the dispersion particle size is 200 nm or less, the geometric scattering or Mie scattering decreases and it becomes a Rayleigh scattering region. In the Rayleigh scattering region, the scattered light is decreased in proportion to the sixth power of the particle size, so that the scattering is reduced and the transparency is improved with the decrease of the dispersion particle size.

Further, when the dispersion particle size is 100 nm or less, the scattered light is very small, which is preferable. From the viewpoint of avoiding the light scattering, it is preferable that the dispersion particle size is smaller.

Although the lower limit of the dispersion particle size of the infrared absorbing particles is not particularly limited, it is preferable that the dispersion particle size is 1 nm or more because the infrared absorbing particles can be easily manufactured industrially, for example.

By setting the dispersion particle size of the infrared absorbing particle to 800 nm or less, the haze value of the infrared absorbing particle dispersion in which the infrared absorbing particles are dispersed in a medium can be set to 30% or less with a visible light transmittance of 85% or less. By making the haze of 30% or less, it is possible to prevent the infrared absorbing particle dispersion from becoming like frosted glass, and to achieve significantly clear transparency.

The dispersion particle size of the infrared absorbing particles can be measured using ELS-8000 manufactured by Otsuka Electronics Co., Ltd. and the like, based on the dynamic light scattering method.

### (Crystallite Diameter)

Further, from the viewpoint of exhibiting excellent infrared absorbing characteristics, the crystallite diameter of the infrared absorbing particles is preferably 1 nm or more and 200 nm or less, more preferably 1 nm or more and 100 nm or less, and further preferably 10 nm or more and 70 nm or less. For the measurement of the crystallite diameter, X-ray diffraction pattern measurement by powder X-ray diffraction method (θ-2θ method) and analysis by Rietveld method may be used. The X-ray diffraction pattern measurement may be carried out using a powder X-ray diffractometer "X'Pert-PRO/MPD" manufactured by PANalytical, Spectris Co., Ltd., for example.

### (b) Dispersant

The dispersant is used for hydrophobizing the surface of the infrared absorbing particles. The dispersant may be selected according to the dispersion system, which is a combination of the infrared absorbing particles, the dispersion medium, the coating resin material, and the like. In particular, a dispersant having one or more groups selected from amino groups, hydroxyl groups, carboxyl groups, sulfo groups, phospho groups, and epoxy groups as functional groups can be suitably used. When the infrared absorbing particles are tungsten oxides or composite tungsten oxides, the dispersant more preferably has amino groups as the functional group.

More preferably, the dispersant has amino groups as the functional group as described above, that is, the dispersant is an amine compound. More preferably, the amine compound is a tertiary amine.

Because the dispersant is used for hydrophobizing the surface of the infrared absorbing particles, it is preferable to use a polymer material. For this reason, the dispersant preferably has one or more groups or rings selected from, for example, long-chain alkyl groups and benzene rings. As the dispersant, a polymer dispersant having a copolymer of styrene and 2-(dimethylamino) ethyl methacrylate, which is a tertiary amine, which can also be used for the coating resin material, or the like can be more preferably used. The long-chain alkyl group preferably has eight or more carbon atoms. For example, the dispersant may be a compound that is a polymer material and an amine compound.

The added amount of the dispersant is not particularly limited and can be freely selected. A suitable amount of the dispersant may be selected according to the type of the dispersant and the infrared absorbing particles and the specific surface area of the infrared absorbing particles. For example, it is preferable that the added amount of the dispersant is 10 parts by mass or more and 500 parts by mass or less for 100 parts by mass of the infrared absorbing particles, because it is particularly easy to prepare a dispersion liquid in a good dispersion state. The added amount of the dispersant is more preferably 10 parts by mass or more and 100 parts by mass or less for 100 parts by mass of the infrared absorbing particles, and further preferably 15 parts by mass or more and 50 parts by mass or less.

### (c) Dispersion Medium

The dispersion medium may be any dispersion medium as long as it can disperse the infrared absorbing particles described above and the dispersant to form the dispersion liquid, and for example, various organic compounds may be used.

As the dispersion medium, one or more compounds selected from aromatic hydrocarbons such as toluene and xylene may be suitably used, for example.

In the dispersion liquid preparation process, the dispersion medium can be prepared by mixing the infrared absorbing particles, the dispersant, and the dispersion medium. In order to reduce the dispersion particle size of the infrared absorbing particles and to disperse them uniformly in the dispersion liquid, it is preferable to grind the infrared absorbing particles at the time of mixing.

The mixing means used in mixing and grinding the infrared absorbing particles, the dispersant, and the dispersion medium is not particularly limited, but one or more means selected from, for example, a bead mill, a ball mill, a sand mill, a paint shaker, an ultrasonic homogenizer, or the like may be used. In particular, a medium stirring mill such as a bead mill, a ball mill, a sand mill, a paint shaker, or the like using a medium such as a bead, a ball, and an Ottawa Sand is more preferably used as the mixing means. This is because, by using a medium stirring mill, it is possible to achieve a desired dispersion particle size for the infrared absorbing particles in a particularly short time, which is preferable from the viewpoint of productivity and reducing contamination with impurities.

### (2) Dispersion Medium Reduction Process

In the dispersion medium reduction process, the dispersion medium can be evaporated from the dispersion liquid and dried.

In the dispersion medium reduction process, it is preferable that the dispersion medium is sufficiently evaporated from the dispersion liquid to collect the infrared absorbing particles.

Although the specific means for evaporating the dispersion medium is not particularly limited, for example, a dryer such as an oven, a vacuum fluidizer such as an evaporator or a vacuum grinder, a spray dryer such as a spray dryer may be used.

The degree of evaporation of the dispersion medium is also not particularly limited, but it is preferable that the content of the dispersion medium can be sufficiently reduced so that, for example, powdered infrared absorbing particles can be obtained after the dispersion medium reduction process.

By evaporating the dispersion medium, it is possible to obtain the infrared absorbing particles in which the dispersant is placed around the infrared absorbing particles and the surface is hydrophobized. Therefore, it is possible to enhance the adhesion between the hydrophobized infrared absorbing particles and the coating resin in which the coating resin material is polymerized, and the coating resin can be placed on at least a part of the surface of the infrared absorbing particles in the polymerization process or the like described later.

### (3) Raw Material Mixture Liquid Preparation Process

In the raw material mixture liquid preparation process, the infrared absorbing particles collected after the dispersion medium reduction process, a coating resin material, an organic solvent, an emulsifier, water, and a polymerization initiator are mixed to prepare a raw material mixture liquid.

In some cases, the infrared absorbing particles collected after the dispersion medium reduction process may be dispersant-containing infrared absorbing particles in which the surface of the infrared absorbing particle is modified by adhesion of the dispersant that has been supplied in the dispersion liquid preparation process. Therefore, in the case where the dispersant is adhered to the infrared absorbing particles, the dispersant-containing infrared absorbing particles collected after the dispersion medium reduction process are used as the infrared absorbing particles in the raw material mixture liquid preparation process.

Each of the materials other than the infrared absorbing particles used in the raw material mixture liquid preparation process will be described.

### (a) Coating Resin Material

The coating resin material is polymerized in the polymerization process to be described later, and becomes the coating resin placed on at least a part of the surface of infrared absorbing particles, thereby constituting a resin capsule, for example. Therefore, as the coating resin material, various monomers or the like capable of forming a desired coating resin by polymerization may be selected.

The coating resin after the polymerization is not particularly limited, and may be one or more resins selected from, for example, thermoplastic resin, thermosetting resin, photocurable resin, or the like.

The thermoplastic resin may be, for example, polyester resin, polycarbonate resin, acrylic resin, polystyrene resin, polyamide resin, vinyl chloride resin, olefin resin, fluororesin, polyvinyl acetate resin, thermoplastic polyurethane resin, acrylonitrile butadiene styrene resin, polyvinyl acetal resin, acrylonitrile/styrene copolymer resin, ethylene/vinyl acetate copolymer resin, or the like.

Examples of the thermosetting resin include phenol resin, epoxy resin, melamine resin, urea resin, unsaturated polyester resin, alkyd resin, thermosetting polyurethane resin, polyimide resin, silicone resin, or the like.

Examples of the photocurable resin include a resin that cures by irradiation with any of ultraviolet, visible, or infrared light.

The coating resin preferably contains one or more resins selected from polyester resin, polycarbonate resin, acrylic resin, polystyrene resin, polyamide resin, vinyl chloride resin, olefin resin, fluororesin, polyvinyl acetate resin, polyurethane resin, acrylonitrile butadiene styrene resin, polyvinyl acetal resin, acrylonitrile/styrene copolymer resin, ethylene/vinyl acetate copolymer resin, phenol resin, epoxy resin, melamine resin, urea resin, unsaturated polyester resin, alkyd resin, polyimide resin, and silicone resin. Any of thermoplastic polyurethane resin and thermosetting polyurethane resin can be used as the polyurethane resin.

Also, as the coating resin, the photocurable resin may be suitably used, and as the photocurable resin, a resin that cures by irradiation with any of ultraviolet, visible, or infrared light may be suitably used, as described above.

In particular, as the coating resin, it is preferable to be a resin to which a mini-emulsion polymerization method can be applied, and more preferably to contain, for example, a polystyrene resin. When the coating resin is a polystyrene resin, styrene may be used as the coating resin material.

As the crosslinking agent, a polyfunctional vinyl monomer such as divinylbenzene or ethylene glycol dimethacrylate may also be added.

### (b) Organic Solvent

The organic solvent has an effect of stabilizing oil droplets and may be referred to as a stabilizer, additive, and the like.

The organic solvent is also not particularly limited, and may be any water-insoluble solvent but is not particularly limited. Among them, it is preferable that the organic solvent has a low molecular weight, and for example, the organic solvent may be one or more compounds selected from long-chain alkyl compounds such as hexadecane; alkyl methacrylic acid esters having a long-chain alkyl moiety such as dodecyl methacrylate and stearyl methacrylate; higher alcohols such as cetyl alcohol; oils such as olive oil; and the like.

As the organic solvent, particularly, long-chain alkyl compounds are more preferable, and hexadecane is further preferable.

### (c) Emulsifier

The emulsifier, or surfactant, may be cationic, anionic, nonionic, and the like, but is not particularly limited.

Examples of the cationic emulsifier include alkylamine salts, quaternary ammonium salts, and the like.

Examples of the anionic emulsifier may include an acid salt, an ester salt, and the like.

Examples of the nonionic emulsifier may include various esters, various ethers, various ester ethers, alkanolamides, and the like.

As the emulsifier, one or more emulsifiers selected from the above-mentioned materials may be used, for example.

In particular, it is preferable to use cationic emulsifiers, that is, surfactants exhibiting cationic properties, from the viewpoint that the infrared absorbing particles form the organic-inorganic hybrid infrared absorbing particles particularly easily.

In particular, when an amine compound is used as the dispersant, it is preferable to use one or more cationic emulsifiers selected from dodecyltrimethylammonium chloride (DTAC), cetyltrimethylammonium chloride (CTAC), and the like as the emulsifiers.

When the amine compound is used as the dispersant, it may be difficult to form the organic-inorganic hybrid infrared absorbing particles when sodium dodecyl sulfate (SDS), an anionic emulsifier, is used. When preparing the raw material mixture liquid, the emulsifier can be added to the water to be added together, for example, and added as an aqueous solution. In this case, it is preferable to add the emulsifier as the aqueous solution so that the concentration is adjusted to be 10 times or more and 1,000 times or less of the critical micelle concentration (CMC), more preferably 10 times or more and 500 times or less, further preferably 10 times or more and 300 times or less, and particularly preferably 10 times or more and 150 times or less.

Further, according to an investigation by the inventors of the present invention, by adding a predetermined ratio of the emulsifier to the coating resin material to be added and sufficiently stirring according to the added amount of the emulsifier, the content of the infrared absorbing particle can be made to be 15 mass% or more in the obtained organic-inorganic hybrid infrared absorbing particles. That is, by selecting the addition ratio of the emulsifier to the resin raw material and the stirring condition, coating or encapsulation with the resin can be carried out even when the content of the infrared absorbing particles is 15 mass% or more. However, these conditions vary according to the type of the emulsifier and the like, so it is preferable to carry out preliminary tests and select appropriate conditions.

### (d) Polymerization Initiator

As the polymerization initiator, one or more polymerization initiators selected from various polymerization initiators such as radical polymerization initiators and ionic polymerization initiators may be used, but are not particularly limited.

Examples of the radical polymerization initiator include an azo compound, a dihalogen, an organic peroxide, and the like. Examples include a redox initiator that is a combination of an oxidizing agent and a reducing agent such as hydrogen peroxide and an iron (II) salt, persulfate and sodium bisulfite, and the like.

Examples of the ionic polymerization initiator include a nucleophile such as n-butyl lithium, an electrophilic agent such as a protonic acid, a Lewis acid, a halogen molecule, a carbocation, and the like.

As the polymerization initiator, one or more polymerization initiators selected from 2,2'-azobisisobutyronitrile (AIBN), potassium peroxodisulfate (KPS), 2,2'-azobis(2-methylpropionamidine) dihydrochloride (V-50), 2,2'-azobis(2-methyl-N-(2-hydroxyethyl) propionamidine) (VA-086), and the like may be suitably used, for example.

When preparing the raw material mixture liquid, the polymerization initiator may be added to the organic phase or the aqueous phase depending on the type of the polymerization initiator. For example, when 2,2'-azobisisobutyronitrile (AIBN) is used, the polymerization initiator may be added to the organic phase, and when potassium peroxodisulfate (KPS) or 2,2'-azobis(2-methylpropionamidine) dihydrochloride (V-50) is used, the polymerization initiator may be added to the aqueous phase.

In the raw material mixture liquid preparation process, it is sufficient to prepare the raw material mixture liquid by mixing infrared absorbing particles collected after the dispersion medium reduction process, the coating resin material, the organic solvent, the emulsifier, water, and the polymerization initiator. Therefore, the preparation procedure of the raw material mixture liquid is not particularly limited, but, for example, a mixture liquid containing the emulsifier can be prepared in advance as the aqueous phase. In addition, as the organic phase, a mixture liquid obtained by dispersing the coating resin material and the infrared absorbing particles collected after the dispersion medium reduction process in the organic solvent can be prepared.

The polymerization initiator may be added to the aqueous phase or to the organic phase according to the type of the polymerization initiator used as described above.

By adding and mixing the organic phase to the aqueous phase, the raw material mixture liquid can be prepared.

It is preferable that the organic phase is added to the aqueous phase and then stirred sufficiently so that the coating resin can be evenly arranged on the surface of the infrared absorbing particles. That is, it is preferable that the raw material mixture liquid preparation process includes a mixing step of mixing the infrared absorbing particles collected after the dispersion medium reduction process, the coating resin material, the organic solvent, the emulsifier, water, and the polymerization initiator; and a stirring step of stirring the obtained mixture liquid.

In the stirring step, stirring may be performed using a stirrer, for example. When the stirring step is performed, the degree of stirring is not particularly limited, but it is preferable to perform stirring so that, for example, an oil-in-water droplet is formed in which the infrared absorbing particles encapsulated in the coating resin material are dispersed in the aqueous phase. The stirring step may not be performed, and may be performed together with the stirring process described later.

The added amount of the polymerization initiator is not particularly limited and can be freely selected. The added amount of the polymerization initiator may be selected according to the type of the coating resin material or the polymerization initiator, the size of the oil droplet as a mini-emulsion, the ratio of the added amount of the coating resin material and the infrared absorbing particles, and the like. For example, when the added amount of the polymerization initiator is 0.01 mol% or more and 1,000 mol% or less with respect to the coating resin material, it is preferable because it is easy to obtain organic-inorganic hybrid infrared absorbing particles in which the infrared absorbing particles are sufficiently coated with the coating resin. The added amount of the polymerization initiator is more preferably 0.1 mol% or more and 200 mol% or less with respect to the coating resin material, and further preferably 0.2 mol% or more and 100 mol% or less.

### (4) Stirring Process

In the stirring process, the raw material mixture liquid obtained in the raw material mixture liquid preparation process may be stirred while cooling.

The degree of stirring in the stirring process is not particularly limited and can be freely selected. For example, it is preferable to stir so that the size of the oil-in-water droplet, which is an O/W type emulsion in which the infrared absorbing particles encapsulated in the coating resin material are dispersed in the aqueous phase, is a mini-emulsion of a predetermined size.

The mini-emulsion is obtained by adding a substance that is almost insoluble in water, that is, a hydrophobic substance, to the organic phase and applying a strong shear force. Examples of the hydrophobic substance include the organic solvent in the raw material mixture liquid preparation process, as described above.

In the stirring process, the obtained mini-emulsion is preferably stirred so as to have particle size characteristics corresponding to the target organic-inorganic hybrid infrared absorbing particles.

In the stirring process, specifically, it is preferable to stir so that the mini-emulsion has a single peak in the particle size distribution based on the scattering intensity measured by the dynamic light scattering method, for example. That is, in the stirring process, it is preferable that the particle size distribution of the obtained mini-emulsion does not have two or more peaks. When the particle size distribution of the mini-emulsion obtained in the stirring process is represented by a single peak, an infrared absorbing dispersion liquid, an infrared absorbing dispersion, or an infrared absorbing fiber can be easily formed because the organic-inorganic hybrid infrared absorbing particles produced using the mini-emulsion have excellent dispersibility in various media such as the dispersion medium. In addition, the infrared absorbing characteristics of the infrared absorbing dispersion liquid, the infrared absorbing dispersion, and the infrared absorbing fiber can be particularly enhanced.

The mini-emulsion obtained in the stirring process preferably has a median diameter D50 of 1 um or less and a standard deviation of 500 or less in the particle size distribution based on the scattering intensity measured by the dynamic light scattering method.

By setting D50 to 1 um or less, the dispersibility can be particularly enhanced when the organic-inorganic hybrid infrared absorbing particles produced using the mini-emulsion are used to prepare the infrared absorbing dispersion liquid, the infrared absorbing dispersion, the infrared absorbing fiber, or the like. By setting the standard deviation to 500 or less, it is possible to particularly minimize the spread of the particle size distribution of the organic-inorganic hybrid infrared absorbing particles produced using the mini-emulsion. Therefore, when the organic-inorganic hybrid infrared absorbing particles are used to prepare the infrared absorbing dispersion liquid, the infrared absorbing dispersion, the infrared absorbing fiber, or the like, the organic-inorganic hybrid infrared absorbing particles are easy to disperse uniformly into the infrared absorbing dispersion liquid, the infrared absorbing dispersion, or the infrared absorbing fiber, and the infrared absorbing characteristics can be significantly enhanced.

The D50 is more preferably 800 nm or less, and further preferably 500 nm or less. Although the lower limit of the D50 is not particularly limited, from the viewpoint of encapsulating a sufficient amount of the infrared absorbing particles, it is preferably 100 nm or more, and more preferably 150 nm or more.

The standard deviation is more preferably 400 or less, further preferably 300 or less, and particularly preferably 250 or less. The lower limit of the standard deviation is not particularly limited, but is preferably, for example, 20 or more, more preferably 50 or more, and further preferably 100 or more. By setting the standard deviation to 20 or more, the productivity of the mini-emulsion can be enhanced.

In the stirring process, specific conditions for making the mini-emulsion having the particle size characteristics are not particularly limited. For example, in accordance with the type, the added amount, and the like of emulsifier, conditions of the stirring tank such as the volume and the presence or absence of baffle boards, and the stirring conditions such as stirring power and the type of stirring means to be used, may be selected so that an appropriate stirring force can be applied to the raw material mixture liquid. The stirring process may be carried out in a plurality of processes while changing the stirring conditions. In addition, it is preferable to carry out a preliminary test and select an appropriate condition for the stirring process.

In the stirring process, it is preferable to carry out stirring while cooling the raw material mixture liquid as described above. This is because by cooling the raw material mixture liquid, a mini-emulsion can be formed while preventing a polymerization reaction from proceeding.

The degree of cooling of the raw material mixture liquid is not particularly limited, but it is preferable to use a refrigerant of 0°C or less, for example, in an ice bath.

### (5) Polymerization Process

In the polymerization process, a polymerization reaction of the coating resin material may be carried out after a deoxygenation treatment to reduce the oxygen amount in the raw material mixture liquid.

In the polymerization process, the coating resin material is polymerized, and the coating resin can be placed on at least a part of the surface of the infrared absorbing particles. At this time, by the polymerization process, it is preferable that the organic-inorganic hybrid infrared absorbing particles in which the infrared absorbing particles are placed in the resin capsule are obtained.

Although the conditions in the polymerization process are not particularly limited, it is possible to perform the deoxygenation treatment to reduce the oxygen amount in the raw material mixture liquid before starting the polymerization. Specific methods of the deoxygenation treatment are not particularly limited, but include a method of performing ultrasonic irradiation of the raw material mixture liquid and a method of blowing an inert gas into the raw material mixture liquid.

The specific conditions for carrying out the polymerization reaction can be freely selected according to the coating resin material or the like added to the raw material mixture liquid, and is not particularly limited. The polymerization reaction may be progressed by, for example, heating the raw material mixture liquid or irradiating the raw material mixture liquid with light of a predetermined wavelength.

According to the method of producing the organic-inorganic hybrid infrared absorbing particles of the present embodiment described above, the organic-inorganic hybrid infrared absorbing particles can be obtained by placing an organic material such as a resin on at least a part of the surface of the infrared absorbing particles, which has been difficult in the conventional technique. Therefore, even when exposed to a chemical environment such as high temperature acid or alkali, it is possible to prevent the contact of the infrared absorbing particles directly with a chemical component of the acid or alkali. Accordingly, the organic-inorganic hybrid infrared absorbing particles having excellent chemical resistance can be provided while minimizing the deterioration of the infrared absorbing characteristics.

In addition, according to the method of producing the organic-inorganic hybrid infrared absorbing particles according to the present embodiment, it is possible to produce the organic-inorganic hybrid infrared absorbing particles having a high content of the infrared absorbing particles of 15 mass% or more, which is particularly difficult in the conventional technique. Therefore, it is possible to obtain the organic-inorganic hybrid infrared absorbing particles having excellent infrared shielding characteristics in addition to chemical resistance.

### 2. Organic-Inorganic Hybrid Infrared Absorbing Particle

The organic-inorganic hybrid infrared absorbing particles of the present embodiment preferably include infrared absorbing particles and a coating resin that covers at least a part of the surface of the infrared absorbing particle. It is more preferable that the coating resin is a resin capsule and the infrared absorbing particles are placed in the resin capsule. That is, it is more preferable that the entire surface of the infrared absorbing particles is covered with the coating resin.

The content of the infrared absorbing particles in the organic-inorganic hybrid infrared absorbing particles may be 15 mass% or more and 55 mass% or less.

As described above, the infrared absorbing particles are usually inorganic materials, and it has been difficult to place an organic material such as resin on at least a part of the surface of the infrared absorbing particle. However, the inventors of the present invention examined and found that the organic-inorganic hybrid infrared absorbing particles having a high content of the infrared absorbing particles can be obtained by disposing the resin on at least a part of the surface of the infrared absorbing particles. By disposing the coating resin on at least a part of the surface of the infrared absorbing particles, even when the organic-inorganic hybrid infrared absorbing particles are exposed to a chemical environment such as high temperature acid or alkali, the infrared absorbing particles can be prevented from directly contacting with a chemical component of the acid or alkali, thereby imparting a chemical resistance. By disposing the infrared absorbing particles in the resin capsule as described above, the chemical resistance can be particularly enhanced.

Furthermore, as described above, it has been difficult to place an organic material such as resin on the surface of the infrared absorbing particles, and in particular, no study has been made on increasing the content of the infrared absorbing particles. Meanwhile, the inventors of the present invention conducted further investigation and found that by making the content of the infrared absorbing particles equal to or greater than a predetermined content in the organic-inorganic hybrid infrared absorbing particles, it is possible to produce an infrared shielding material compatible with the chemical resistance and the infrared shielding characteristics, thereby completing the present invention.

FIG. 2 illustrates a cross-sectional schematic diagram of an organic-inorganic hybrid infrared absorbing particle 20 of the present embodiment. As illustrated in FIG. 2, in the organic-inorganic hybrid infrared absorbing particles 20 of the present embodiment, a coating resin 22 is placed on at least a part of the surface of infrared absorbing particles 21.

In particular, as illustrated in FIG. 2, in the organic-inorganic hybrid infrared absorbing particle 20 of the present embodiment, it is preferable that the infrared absorbing particles 21 are placed in a resin capsule 221 formed of the coating resin 22. As illustrated in FIG. 2, a plurality of the infrared absorbing particles 21 may be placed in one resin capsule 221, or only one infrared absorbing particle may be placed. The infrared absorbing particles 21 may be unevenly distributed in the resin capsule 221, but may preferably be dispersed.

The infrared absorbing particles 21 may be at least partially coated with the resin capsule 221. Some of the infrared absorbing particles 21 may be exposed to the outer surface on the resin capsule 221. It is preferable that the infrared absorbing particles 21 are completely coated with the resin capsule 221, that is, encapsulated in the resin capsule 221. This is because when the infrared absorbing particles 21 are completely coated with the resin capsule 221, even in a case where the organic-inorganic hybrid infrared absorbing particles come into contact with various chemical components, the infrared absorbing particles 21 can be more reliably prevented from coming into contact with the chemicals, and the chemical resistance can be particularly enhanced.

The organic-inorganic hybrid infrared absorbing particle 20 illustrated in FIG. 2 is only illustrated schematically for the purpose of explanation. The organic-inorganic hybrid infrared absorbing particles of the present embodiment are not limited to the illustrated configuration. For example, the shape, size, arrangement, and distribution of the infrared absorbing particles 21, and the shape and arrangement of the coating resin 22 are not limited to the illustrated configuration.

### (1) Components of Organic-Inorganic Hybrid Infrared Absorbing Particles

The components of the organic-inorganic hybrid infrared absorbing particles of the present embodiment will be described below.

### (1-1) Coating Resin

The material of the coating resin is not particularly limited, but the coating resin may contain a resin component, for example. The resin component may be selected in accordance with the optical characteristics and the like required for the organic-inorganic hybrid infrared absorbing particles, but is not particularly limited. The coating resin may contain, as the resin component, one or more resins selected from, for example, thermoplastic resin, thermosetting resin, photocurable resin, and the like.

The thermoplastic resin may be, for example, polyester resin, polycarbonate resin, acrylic resin, polystyrene resin, polyamide resin, vinyl chloride resin, olefin resin, fluororesin, polyvinyl acetate resin, thermoplastic polyurethane resin, acrylonitrile butadiene styrene resin, polyvinyl acetal resin, acrylonitrile/styrene copolymer resin, ethylene/vinyl acetate copolymer resin, and the like.

The thermosetting resin may be, for example, phenol resin, epoxy resin, melamine resin, urea resin, unsaturated polyester resin, alkyd resin, thermosetting polyurethane resin, polyimide resin, silicone resin, and the like.

The photocurable resin may be, for example, a resin that cures by irradiation with any of ultraviolet, visible, or infrared light, and the like.

The coating resin preferably contains, as the resin component, one or more resins selected from, in particular, polyester resin, polycarbonate resin, acrylic resin, polystyrene resin, polyamide resin, vinyl chloride resin, olefin resin, fluororesin, polyvinyl acetate resin, polyurethane resin, acrylonitrile butadiene styrene resin, polyvinyl acetal resin, acrylonitrile/styrene copolymer resin, ethylene/vinyl acetate copolymer resin, phenol resin, epoxy resin, melamine resin, urea resin, unsaturated polyester resin, alkyd resin, polyimide resin, and silicone resin. As the polyurethane resin, any of thermoplastic polyurethane resin and thermosetting polyurethane resin may be used. The resin component contained in the coating resin may also be composed of one or more resins selected from the resin group.

As the resin component, the photocurable resin may also be suitably used. As the photocurable resin, as described above, a resin that cures by irradiation with any of ultraviolet, visible, or infrared light may be suitably used. Therefore, the coating resin may also contain the photocurable resin as the resin component. The photocurable resin preferably contains a resin that cures by irradiation with any of ultraviolet, visible, or infrared light. The resin component contained in the coating resin may also be composed of the photocurable resin.

The coating resin may be composed of only the resin component, but it may also contain, for example, an emulsifier added in the manufacturing process, a polymerization initiator, and the like.

### (1-2) Infrared Absorbing Particles

The infrared absorbing particles have already been described in the method of producing the organic-inorganic hybrid infrared absorbing particles, so the description will be omitted, but preferably, infrared absorbing particles that contains various materials containing free electrons are used, and more preferably, infrared absorbing particles that contains various inorganic materials containing free electrons are used, for example.

As the infrared absorbing particles, infrared absorbing particles containing one or more oxides selected from a tungsten oxide having oxygen deficiency and a composite tungsten oxide may be particularly preferably used. In this case, specifically, it is preferable that the infrared absorbing particles contain one or more oxides selected from, for example, a tungsten oxide represented by the general formula W_{y}O_{z} (W: tungsten, O: oxygen, 2.2≤z/y≤2.999) and a composite tungsten oxide represented by the general formula MₓW_{y}O_{z} (the element M is one or more elements selected from H, He, Li, Na, K, Rb, Cs, Fr, Be, Mg, Ca, Sr, Ba, Ra, Sc, Y, La, Ce, Pr, Nd, Pm, Sm, Eu, Gd, Tb, Dy, Ho, Er, Tm, Yb, Lu, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Hf, Os, Bi, and I; 0.001≤x/y≤1; and 2.0≤z/y<4.0).

According to the organic-inorganic hybrid infrared absorbing particles described above, it is possible to place a coating resin, which is an organic material, on at least a part of the surface of the infrared absorbing particles, which has been difficult in the conventional technique. Therefore, even when the infrared absorbing particles are exposed to a chemical environment such as high temperature acid or alkali, it is possible to prevent the contact of the infrared absorbing particles directly with a chemical component of the acid or alkali. Accordingly, the organic-inorganic hybrid infrared absorbing particles having excellent chemical resistance can be provided while minimizing the deterioration of the infrared absorbing characteristics. Thus, the infrared absorbing fiber using the organic-inorganic hybrid infrared absorbing particles can also have chemical resistance.

### (2) Content of Infrared Absorbing Particles

According to an investigation by the inventors of the present invention, the chemical resistance can be enhanced by using the organic-inorganic hybrid infrared absorbing particles, but in order to achieve particularly high infrared shielding characteristics, it is necessary to increase the content of the infrared absorbing particles.

Therefore, it is preferable that the content of the infrared absorbing particles in the organic-inorganic hybrid infrared absorbing particles of the present embodiment is 15 mass% or more, and more preferably 20 mass% or more.

However, when the content of the infrared absorbing particles is too high, the degree to which the infrared absorbing particles are coated by the coating resin may be reduced. Therefore, the content of the infrared absorbing particles is preferably 55 mass% or less, and more preferably 50 mass% or less.

### (3) Particle Size Distribution of Organic-Inorganic Hybrid Infrared Absorbing Particles

According to an investigation by the inventors of the present invention, it is preferable that the organic-inorganic hybrid infrared absorbing particles of the present embodiment have a single peak in the particle size distribution based on the scattering intensity measured by a dynamic light scattering method. That is, it is preferable that the particle size distribution does not have two or more peaks. When the particle size distribution of the organic-inorganic hybrid infrared absorbing particles is represented by a single peak in this manner, the infrared absorbing dispersion liquid, the infrared absorbing dispersion, and the infrared absorbing fiber can be easily formed because of excellent dispersibility in various media such as a dispersion medium. In addition, the obtained infrared absorbing dispersion liquid, the infrared absorbing dispersion, or the infrared absorbing fiber can be significantly enhanced in the infrared absorbing characteristics.

The organic-inorganic hybrid infrared absorbing particles of the present embodiment preferably have a median diameter D50 of 1 um or less and a standard deviation of 500 or less in the particle size distribution based on the scattering intensity measured by the dynamic light scattering method.

By setting the D50 to 1 um or less, it is possible to particularly enhance the dispersibility of the infrared absorbing dispersion liquid, the infrared absorbing dispersion, the infrared absorbing fiber, or the like, including the organic-inorganic hybrid infrared absorbing particles. Moreover, by setting the standard deviation to 500 or less, it is possible to particularly minimize the spread of the particle size distribution of the organic-inorganic hybrid infrared absorbing particles, and when using the infrared absorbing dispersion liquid, the infrared absorbing dispersion, the infrared absorbing fiber, or the like, the particles are easily dispersed uniformly in the infrared absorbing dispersion liquid, the infrared absorbing dispersion, and the infrared absorbing fiber, and the infrared shielding characteristic can be particularly enhanced.

The D50 is more preferably 800 nm or less, and further preferably 500 nm or less. The lower limit of the D50 is not particularly limited, but from the viewpoint of encapsulating a sufficient amount of the infrared absorbing particles, it is preferably 30 nm or more, more preferably 50 nm or more, and further preferably 100 nm or more.

The standard deviation is more preferably 400 or less, further preferably 300 or less, and particularly preferably 250 or less. The lower limit of the standard deviation is not particularly limited, but for example, it is preferably 20 or more, more preferably 50 or more, and further preferably 100 or more. By setting the standard deviation to 20 or more, the productivity of the organic-inorganic hybrid infrared absorbing particles can be increased.

The infrared absorbing fiber according to the present embodiment may include a fiber in addition to the organic-inorganic hybrid infrared absorbing particles described so far.

The infrared absorbing fiber according to the present embodiment may be produced by dispersing the organic-inorganic hybrid infrared absorbing particles described above in a suitable medium and causing the dispersion to be present in one or more parts selected from the interior of the fiber and the surface of the fiber. The fiber and the like will be described below.

### 3. Fiber

The fiber included in the infrared absorbing fiber according to the present embodiment may be selected from a variety of fibers depending on the application.

The fiber included in the infrared absorbing fiber according to the present embodiment may include one or more fibers selected from a synthetic fiber, a semisynthetic fiber, a natural fiber, a recycled fiber, and an inorganic fiber, for example. Specifically, for example, any of the following fibers may be used as the fiber: one or more fibers selected from a fiber group consisting of a synthetic fiber, a semisynthetic fiber, a natural fiber, a recycled fiber, and an inorganic fiber; or one or more fibers selected from mixed yarns such as a blended yarn, a doubled yarn, or a combined filament yarn using one or more fibers selected from the above fiber group; and the like. In consideration of incorporating the organic-inorganic hybrid infrared absorbing particles into the fiber by a simple method and maintaining heat retention, preferably the fiber includes the synthetic fiber, and more preferably the fiber is the synthetic fiber.

When the infrared absorbing fiber according to the present embodiment includes the synthetic fiber as the fiber, the specific type of the synthetic fiber is not particularly limited. For example, one or more synthetic fibers selected from a polyurethane fiber, a polyamide fiber, an acrylic fiber, a polyester fiber, a polyolefin fiber, a polyvinyl alcohol fiber, a polyvinylidene chloride fiber, a polyvinyl chloride fiber, a polyether ester fiber, and the like, may be suitably used.

Examples of the polyamide fibers include one or more fibers selected from nylon, nylon 6, nylon 66, nylon 11, nylon 610, nylon 612, aromatic nylon, aramid, and the like.

Examples of the acrylic fibers include one or more fibers selected from polyacrylonitrile, acrylonitrile-vinyl chloride copolymer, modacrylic fiber, and the like.

Examples of the polyester fiber include one or more fibers selected from polyethylene terephthalate, polybutylene terephthalate, polytrimethylene terephthalate, polyethylene naphthalate, and the like.

Examples of the polyolefin fiber include one or more fibers selected from polyethylene, polypropylene, polystyrene, and the like.

Examples of the polyvinyl alcohol fiber include vinylon and the like.

Examples of the polyvinylidene chloride fiber include vinylidene and the like.

Examples of the polyvinyl chloride fiber include polyvinyl chloride and the like.

Examples of the polyether ester fiber include one or more fibers selected from Rexe, Success, and the like.

When the infrared absorbing fiber according to the present embodiment includes the semisynthetic fiber as the fiber, the semisynthetic fiber preferably includes one or more fibers selected from, for example, a cellulose fiber, a protein fiber, chlorinated rubber, hydrochlorinated rubber, and the like.

Examples of the cellulose fiber include one or more fibers selected from acetate, triacetate, acetate oxide, and the like.

Examples of the protein fiber include Promix and the like.

When the infrared absorbing fiber according to the present embodiment includes the natural fiber as the fiber, the natural fiber preferably includes one or more fibers selected from, for example, a vegetable fiber, an animal fiber, a mineral fiber, and the like.

Examples of the vegetable fiber include one or more fibers selected from cotton, ceiba, flax, hemp, jute, manila hemp, sisal hemp, New Zealand flax, luobuma, palm fibers, rush, straw, and the like.

Examples of the animal fiber include one or more fibers selected from wool, goat hair, mohair, cashmere, alpaca, angora, camel, vicuna, and other wools; and silk, down, feathers, and the like.

Examples of the mineral fiber include one or more fibers selected from asbestos and the like.

When the infrared absorbing fiber according to the present embodiment includes the recycled fiber as the fiber, the recycled fiber preferably includes one or more fibers selected from, for example, a cellulose fiber, a protein fiber, an algin fiber, a rubber fiber, a chitin fiber, a mannan fiber, and the like.

Examples of the cellulose fiber include one or more fibers selected from rayon, viscose rayon, cupra, polynosic fiber, cuprammonium rayon, and the like.

Examples of the protein fiber include one or more fibers selected from a casein fiber, a peanut protein fiber, a maize protein fiber, a soy protein fiber, a recycled silk, and the like.

When the infrared absorbing fiber according to the present embodiment includes the inorganic fiber as the fiber, the inorganic fiber preferably includes one or more fibers selected from, for example, a metal fiber, a carbon fiber, a silicate fiber, and the like.

Examples of the metal fiber include one or more fibers selected from fibers of various metals, a gold thread, a silver thread, a heat resistant alloy fiber, and the like.

Examples of the silicate fiber include one or more fibers selected from a glass fiber, a slag fiber, a rock fiber, and the like.

The cross-sectional shape of the fiber of the infrared absorbing fiber according to the present embodiment is not particularly limited. Examples of the cross sectional shape include one or more shapes selected from a circular shape, a triangular shape, a hollow shape, a flat shape, a Y-shape, a star shape, a core-sheath shape, and the like. The infrared absorbing fiber according to the present embodiment may include fibers with different cross-sectional shapes at the same time.

The organic-inorganic hybrid infrared absorbing particles may be located on one or more parts selected from the interior of the fiber and the surface of the fiber in various ways depending on the cross-sectional shape of the fiber and the like. For example, in the case where the cross-sectional shape of the fiber is the core-sheath type, the organic-inorganic hybrid infrared absorbing particles may be included in the core portion or in the sheath portion of the fiber. The shape of the fiber included in the infrared absorbing fiber according to the present embodiment may be a filament (long fiber) or a staple (short fiber).

### 4. Additive

The infrared absorbing fiber according to the present embodiment may include an antioxidant, a flame retardant, a deodorant, an insect repellent, an antibacterial agent, an ultraviolet absorber, and the like, depending on the purpose, within a range that does not impair the performance of the fiber included.

In addition to the infrared absorbing material, the infrared absorbing fiber according to the present embodiment may further contain particles having a far-infrared radiation ability. The particles having the far-infrared radiation ability may be located in one or more parts selected from, for example, the interior of the fiber and the surface of the fiber. As the particles having the far-infrared radiation ability, one or more compounds selected from, for example, metal oxides such as ZrO₂, SiO₂, TiO₂, Al₂O₃, MnO₂, MgO, Fe₂O₃, CuO, and the like; carbides such as ZrC, SiC, and TiC, and the like; nitrides such as ZrN, Si₃N₄, AlN, and the like; and the like may be suitably used.

The organic-inorganic hybrid infrared absorbing particles included in the infrared absorbing fiber according to the present embodiment are an infrared absorbing material and are a near-infrared absorbing material. The organic-inorganic hybrid infrared absorbing particles according to the present embodiment have a property of absorbing solar light energy having a wavelength of 0.3 um or more and 3 um or less. In particular, the organic-inorganic hybrid infrared absorbing particles according to the present embodiment selectively absorb the near-infrared region having a wavelength of 0.9 um or more and 2.2 um or less, and convert it into heat, or re-radiate it.

In contrast, the particles having the far-infrared radiation ability described above have an ability of receiving the energy absorbed by the organic-inorganic hybrid infrared absorbing particles, which are a near-infrared absorbing material, and converting the energy into heat energy of mid/far-infrared wavelengths and radiating the heat energy. For example, the particles of ZrO₂ convert the energy into heat energy having a wavelength of 2 um or more and 20 um or less, and radiate the heat energy. Accordingly, the particles having the far-infrared radiation ability and the organic-inorganic hybrid infrared absorbing particles are present in the interior and on the surface of the fiber together, so that the solar energy absorbed by the organic-inorganic hybrid infrared absorbing particles can be efficiently consumed in the interior and on the surface of the fiber, and heat is retained more effectively, for example.

FIG. 3 is a cross-sectional schematic diagram of infrared absorbing fiber 30 according to the present embodiment in a plane passing through the central axis of the infrared absorbing fiber 30. As illustrated in FIG. 3, in the infrared absorbing fiber 30 according to the present embodiment, organic-inorganic hybrid infrared absorbing particles 32 are located in one or more parts selected from an interior 31B and a surface 31A of a fiber 31. That is, in the infrared absorbing fiber 30 according to the present embodiment, the organic-inorganic hybrid infrared absorbing particles may be located in both the interior 31B and the surface 31A of the fiber 31, or in either the interior 31B or the surface 31A of the fiber 31.

In FIG. 3, an example is illustrated in which the organic-inorganic hybrid infrared absorbing particles 32 are located in both the surface 31A and the interior 31B of the fiber 31. It is not limited to this configuration, and the organic-inorganic hybrid infrared absorbing particles 32 may be located in only one of the surface 31A and the interior 31B of the fiber 31, as described above. FIG. 3 only schematically illustrates the infrared absorbing fiber 30, and the distribution, shape, size, and the like of the organic-inorganic hybrid infrared absorbing particles 32 are not limited to this configuration.

The organic-inorganic hybrid infrared absorbing particles have both chemical resistance and excellent infrared absorbing characteristics, as described above. Therefore, the infrared absorbing fiber according to the present embodiment including the organic-inorganic hybrid infrared absorbing particles can also have both chemical resistance and excellent infrared absorbing characteristics.

### [Method of Producing Infrared Absorbing Fiber]

The method of producing the infrared absorbing fiber according to the present embodiment is not particularly limited. The infrared absorbing fiber may be produced by placing the organic-inorganic hybrid infrared absorbing particles on one or more parts selected from the surface of the fiber and the interior of the fiber.

For example, the infrared absorbing fiber according to the present embodiment may be produced by the following production methods (a) to (d).
(a) A method whereby the organic-inorganic hybrid infrared absorbing particles are directly mixed and spun with a starting material polymer of a synthetic fiber.
(b) A method whereby a master batch is manufactured in advance in which the organic-inorganic hybrid infrared absorbing particles are added in a large concentration to a portion of the starting material polymer, and spinning is performed after the master batch is diluted to a prescribed concentration.
(c) A method whereby the organic-inorganic hybrid infrared absorbing particles are uniformly dispersed in advance in the starting material monomer or oligomer solution, and the dispersion liquid is used to synthesize the desired starting material polymer while the organic-inorganic hybrid infrared absorbing particles are simultaneously dispersed in the starting material polymer, after which spinning is performed.
(d) A method whereby a binding agent or the like is used to attach the organic-inorganic hybrid infrared absorbing particles to the surfaces of fibers obtained by spinning in advance.

The production method (a) to (d) described above, wherein the fiber included in the infrared absorbing fiber according to the present embodiment includes the organic-inorganic hybrid infrared absorbing particles, will be described with specific examples.

Method (a):
For example, a case where polyester fiber is used as the fiber will be described.

A dispersion liquid of organic-inorganic hybrid infrared absorbing particles is added to a pellet of polyethylene terephthalate resin, which is a thermoplastic resin, and mixed uniformly with a blender, and then the solvent is removed. The mixture in which the solvent is removed is melt-kneaded with a twin-screw extruder to obtain a master batch containing the organic-inorganic hybrid infrared absorbing particles. The master batch containing the organic-inorganic hybrid infrared absorbing particles is melt-mixed near the melting temperature of the resin and spun according to various known methods, for example.

A dispersant may be added to improve the dispersibility of the organic-inorganic hybrid infrared absorbing particles to the polyethylene terephthalate resin. The dispersant is not limited as long as it can disperse the organic-inorganic hybrid infrared absorbing particles into the polyethylene terephthalate resin or a fiber obtained by spinning the master batch containing the resin. For example, the dispersant applied to the polyethylene terephthalate resin is not particularly limited, but is preferably, for example, a polymer dispersant, and is more preferably a dispersant having a main chain selected from polyester, polyether, polyacrylic, polyurethane, polyamine, polystyrene, and aliphatic, or having a main chain copolymerized with two or more types of unit structures selected from polyester, polyether, polyacrylic, polyurethane, polyamine, polystyrene, and aliphatic.

The dispersant preferably includes one or more types of functional groups selected from amine-containing groups, hydroxyl groups, carboxyl groups, carboxyl group-containing groups, sulfo groups, phosphate groups, or epoxy groups. In particular, a polyacrylic dispersant having amine-containing groups as the functional groups is preferable. The dispersant including any of the above functional groups can adsorb on the surface of the organic-inorganic hybrid infrared absorbing particles and more reliably prevent the agglomeration of the organic-inorganic hybrid infrared absorbing particles. Therefore, the organic-inorganic hybrid infrared absorbing particles can be dispersed more uniformly, and the dispersant including any of the above functional groups can be suitably used.

Examples of the dispersant include Solsperse (registered trademark) (hereinafter the same) 9000, 12000, 17000, 20000, 21000, 24000, 26000, 27000, 28000, 32000, 35100, 54000, Solthix 250, manufactured by Lubrizol Japan Ltd.; EFKA (registered trademark) (hereinafter the same) 4008, EFKA 4009, EFKA 4010, EFKA 4015, EFKA 4046, EFKA 4047, EFKA 4060, EFKA 4080, EFKA 7462, EFKA 4020, EFKA 4050, EFKA 4055, EFKA 4585, EFKA 4400, EFKA 4401, EFKA 4402, EFKA 4403, EFKA 4300, EFKA 4320, EFKA 4330, EFKA 4340, EFKA 6220, EFKA 6225, EFKA 6700, EFKA 6780, EFKA 6782, EFKA 8503, manufactured by EFKA additives B.V.; AJISPER (registered trademark) (hereinafter the same) PB821, AJISPER PB822, AJISPER PB824, AJISPER PB881, FAMEX L-12, manufactured by Ajinomoto Fine-Techno Co., Inc.; DisperBYK (registered trademark) (hereinafter the same) 101, DisperBYK 106, DisperBYK 108, DisperBYK 116, DisperBYK 130, DisperBYK 140, DisperBYK 142, DisperBYK 145, DisperBYK 161, DisperBYK 162, DisperBYK 163, DisperBYK 164, DisperBYK 166, DisperBYK 167, DisperBYK 168, DisperBYK 171, DisperBYK 180, DisperBYK 182, DisperBYK 2000, DisperBYK 2001, DisperBYK 2009, DisperBYK 2013, DisperBYK 2022, DisperBYK 2025, DisperBYK 2050, DisperBYK 2155, DisperBYK 2164, BYK 350, BYK 354, BYK 355, BYK 356, BYK 358, BYK 361, BYK 381, BYK 392, BYK 394, BYK 300, BYK 3441, manufactured by BYK Japan KK; DISPARLON (registered trademark) (hereinafter the same) 1831, DISPARLON 1850, DISPARLON 1860, DISPARLON DA-400N, DISPARLON DA-703-50, DISPARLON DA-725, DISPARLON DA-705, DISPARLON DA-7301, DISPARLON DN-900, DISPARLON NS-5210, DISPARLON NVI-8514L, manufactured by Kusumoto Chemicals, Ltd.; TERPLUS (registered trademark) MD1000, D1180, D1130, manufactured by Otsuka Chemical Co., Ltd.

Method (b):
(a) A master batch containing organic-inorganic hybrid infrared absorbing particles is prepared by a method similar to that described above and the like, and the master batch and a master batch made of polyethylene terephthalate without adding the organic-inorganic hybrid infrared absorbing particles are melt-mixed near the melting temperature of the resin to achieve a desired mixing ratio and spun according to a known method.

Method (c):
For example, a case where urethane fiber is used as the fiber will be described.

A polymer diol containing organic-inorganic hybrid infrared absorbing particles is reacted with an organic diisocyanate in a twin-screw extruder to synthesize an isocyanate group-terminated prepolymer, and a chain extender is reacted to produce a polyurethane solution (a starting material polymer). The polyurethane solution is spun according to various known methods.

Method (d):
For example, a case where the organic-inorganic hybrid infrared absorbing particles are attached to the surface of the natural fiber will be described.

First, a treatment liquid is prepared by mixing the organic-inorganic hybrid infrared absorbing particles, one or more types of binder resins selected from acrylic, epoxy, urethane, and polyester, and a solvent such as water.

Next, natural fiber is immersed in the prepared treatment liquid, or the prepared treatment liquid is impregnated into the natural fiber by padding, printing, or spraying, and dried. As a result, the organic-inorganic hybrid infrared absorbing particles can be attached to the natural fiber. The method described in (d) can be applied to any one of: in addition to the natural fiber described above, a synthetic fiber, a semisynthetic fiber, a recycled fiber, and an inorganic fiber; a blended yarn, a doubled yarn, and a combined filament yarn of these fibers; and the like.

When carrying out the methods described in (a) to (d), the dispersion method of dispersing the organic-inorganic hybrid infrared absorbing particles in the dispersion medium (solvent) is not particularly limited, and any method can be used as long as the organic-inorganic hybrid infrared absorbing particles can be uniformly dispersed in a liquid, that is, a dispersion medium. For example, a method such as a medium stirring mill, a ball mill, a sand mill, an ultrasonic dispersion, or the like can be suitably applied.

The dispersion medium of the organic-inorganic hybrid infrared absorbing particles is not particularly limited but can be selected according to the fiber to be mixed. For example, one or more types selected from common organic solvents such as alcohols, ethers, esters, ketones, aromatic compounds, and the like, and water, can be used.

Further, when the organic-inorganic hybrid infrared absorbing particles are attached to or mixed with the fiber or the polymer used as the raw material thereof, the dispersion liquid of the organic-inorganic hybrid infrared absorbing particles may be directly mixed with the fiber or the polymer used as the raw material thereof. As necessary, acid or alkali may be added to the dispersion liquid of the organic-inorganic hybrid infrared absorbing particles to adjust the pH, or various surfactants, coupling agents, and the like may be added to further improve the dispersion stability of the organic-inorganic hybrid infrared absorbing particles.

The content of the organic-inorganic hybrid infrared absorbing particles contained in the infrared absorbing fiber according to the present embodiment is not particularly limited. For example, the content of the organic-inorganic hybrid infrared absorbing particles in the infrared absorbing fiber according to the present embodiment is preferably from 0.001 mass% or more and 80 mass% or less. Further, when considering the weight of the infrared absorbing fiber after the addition of the organic-inorganic hybrid infrared absorbing particles and the raw material cost, the content of the organic-inorganic hybrid infrared absorbing particles in the infrared absorbing fiber is more preferably 0.005 mass% or more and 50 mass% or less.

When the content of the organic-inorganic hybrid infrared absorbing particles in the infrared absorbing fiber is 0.001 mass% or more, a sufficient infrared absorbing effect can be obtained even when the fabric using the infrared absorbing fiber is thin, for example.

Further, it is preferable that the content of the organic-inorganic hybrid infrared absorbing particles of the infrared absorbing fiber is 80 mass% or less, because it is possible to prevent a reduction of spinning ability due to filter clogging, thread breakage, and other problems in the spinning process. Particularly, it is even more preferable that the content is 50 mass% or less. It is preferable because the added amount of the organic-inorganic hybrid infrared absorbing particles is reduced, and the physical properties of the fiber are barely impaired.

As described above, according to the infrared absorbing fiber according to the present embodiment, by placing the infrared absorbing particles on the interior or the surface of the fiber, it is possible to provide a fiber which efficiently absorbs infrared rays from sunlight and the like and has excellent heat retention. In addition, because the infrared absorbing fiber according to the present embodiment has high chemical resistance, the infrared absorbing characteristics do not deteriorate even when exposed to a chemical environment such as high temperature acid or alkali. As a result, the infrared absorbing fiber according to the present embodiment can be used for various applications such as fiber products such as winter clothing, sports clothing, stockings, curtains, and the like, and other industrial fiber products, and the like, that require heat insulation.

### [Fiber Product]

The fiber product according to the present embodiment may be made by processing the infrared absorbing fiber described above, and may include the infrared absorbing fiber described above. The fiber product according to the present embodiment may also be made of the infrared absorbing fiber described above.

The fiber product according to the present embodiment including the infrared absorbing fiber has excellent characteristics having a visible light absorption of 20% or less and a solar absorption of 57% or more. When the visible light absorption is 20% or less and the solar absorption ratio is 57% or more, it indicates that the fiber product is light-colored and has an excellent infrared absorbing effect.

The fiber product according to the present embodiment including the infrared absorbing fiber according to the present embodiment has excellent chemical resistance. For example, even when the fiber product is immersed in a 0.01 mol/l sodium hydroxide aqueous solution held at 80°C for 30 minutes, the solar absorption described above is maintained at 57% or more. That is, the fiber product according to the present embodiment can have chemical resistance.

### Examples

Hereinafter, the present invention will be specifically described with reference to examples. However, the present invention is not limited to the following examples.

The optical properties of the fiber products obtained in the Examples and Comparative Examples were measured using a spectrophotometer U-4100 (manufactured by Hitachi, Ltd.). The visible light transmittance, visible light reflectance, solar radiation transmittance, and solar radiation reflectance were measured according to JIS R 3106 (2019).

To measure the crystallite diameter of infrared absorbing particles, dry powder of infrared absorbing particles obtained by removing the solvent from the dispersion liquid of infrared absorbing particles was used. The X-ray diffraction pattern of the infrared absorbing particles was measured by powder X-ray diffraction method (θ-2θ method) using a powder X-ray diffractometer (X'Pert-PRO/MPD manufactured by PANalytical, Spectris Co., Ltd.). The crystal structure included in the infrared absorbing particles was identified from the obtained X-ray diffraction pattern, and the crystallite diameter was calculated using the Rietveld method.

With respect to the mini-emulsion obtained in the stirring process and the organic-inorganic hybrid infrared absorbing particles obtained after the polymerization process, a particle size measurement device (ELSZ-2000 manufactured by Otsuka Electronics Co., Ltd.) based on the dynamic light scattering method was used to measure the particle size distribution based on the scattering intensity, and D50 and standard deviation were calculated.

### [Example 1]

Infrared absorbing fibers and fiber products were prepared and evaluated by the following procedure.

### 1. Production of Organic-Inorganic Hybrid Infrared Absorbing Particles

Organic-inorganic hybrid infrared absorbing particles for use in an infrared absorbing fiber were produced according to the following process.

### (Dispersion Liquid Preparation Process)

In the dispersion liquid preparation process, a dispersion liquid containing infrared absorbing particles, a dispersant, and a dispersion medium was prepared.

As the infrared absorbing particles, a composite tungsten oxide powder (YM-01, manufactured by Sumitomo Metal Mining Co., Ltd.) containing hexagonal cesium tungsten bronze (Cs_{0.33}WO_{z}, 2.0≤z<4.0), in which ratio of cesium (Cs) to tungsten (W) in amount of substance was Cs/W=0.33, was prepared.

As the dispersant, a polymer dispersant that is a copolymer of styrene and 2-(dimethylamino) ethyl methacrylate, was prepared.

As the dispersion medium, toluene was prepared.

A mixture liquid obtained by mixing 20 mass% of the infrared absorbing particles, 3 mass% of the dispersant, and 77 mass% of the dispersion medium was loaded into a paint shaker containing ZrO₂ beads with a diameter of 0.3mm and subjected to pulverizing and dispersing treatment for 21 hours, a dispersion liquid of Cs_{0.33}WO_{z} particles according to Example 1 was obtained.

### (Dispersion Medium Reduction Process)

Toluene of the dispersion medium was removed from the dispersion liquid of Cs_{0.33}WO_{z} particles obtained in the dispersion liquid preparation process using an evaporator, and the infrared absorbing particles were collected. The collected infrared absorbing particles were to be a dry powder of Cs_{0.33}WO_{z} particles including a polymer dispersant.

The crystallite diameter of the collected infrared absorbing particles, that is, Cs_{0.33}WO_{z} particles, was measured to be 16 nm.

The crystallite diameter was measured and calculated by the method described above.

### (Raw Material Mixture Liquid Preparation Process)

13.2 g of the infrared absorbing particles obtained in the dispersion medium reduction process, 10 g of styrene as a raw material for a coating resin, 0.5 g of 2,2'-azobisisobutyronitrile as a polymerization initiator, and 0.7 g of hexadecane as an organic solvent were mixed to form an organic phase.

Separately from the organic phase, 1.0 g of dodecyltrimethylammonium chloride as an emulsifier and 100 g of water were mixed to form an aqueous phase.

Then, a raw material mixture liquid was prepared by adding the organic phase to the aqueous phase.

### (Stirring Process)

The raw material mixture liquid prepared in the raw material mixture liquid preparation process was stirred under an ice bath until the obtained mini-emulsion has a single peak in the particle size distribution based on the scattering intensity measured by the dynamic light scattering method. In this case, the D50 was 188 nm and the standard deviation was 119 in the particle size distribution.

### (Polymerization Process)

After the stirring process, the raw material mixture liquid was subjected to nitrogen bubbling under an ice bath for 15 minutes and deoxygenated.

Thereafter, the polymerization reaction of styrene was carried out by heating at 70°C for 6 hours under a nitrogen atmosphere, and a dispersion liquid containing the organic-inorganic hybrid infrared absorbing particles was obtained.

The obtained dispersion liquid containing the organic-inorganic hybrid infrared absorbing particles was diluted and transferred to a microgrid for TEM observation, and TEM observation of the transferred material was carried out. The TEM image is presented in FIG. 4. From the TEM image, it was confirmed that the particles including the composite tungsten oxide, which are infrared absorbing particles 401 and are presented in black, are encapsulated in a coating film of polystyrene resin, which is a coating resin 402 and is presented in gray, to form organic-inorganic hybrid infrared absorbing particles 40. A microgrid 41 in the TEM image of FIG. 4 is not included in the organic-inorganic hybrid infrared absorbing particles.

The content of the infrared absorbing particles in the organic-inorganic hybrid infrared absorbing particles obtained in Example 1 was 45.4 mass%. In order to calculate the content of the infrared absorbing particles in the organic-inorganic hybrid infrared absorbing particles, TGA (thermogravimetry) was performed on the organic-inorganic hybrid infrared absorbing particles, and the resin component was removed by raising the temperature until the weight loss stopped, and the mass of the infrared absorbing particles in the obtained organic-inorganic hybrid infrared absorbing particles was measured. Then, the content of the measured infrared absorbing particles in the organic-inorganic hybrid infrared absorbing particles was calculated. The same calculation was performed in the following other Examples and Comparative Examples.

The obtained organic-inorganic hybrid infrared absorbing particles had a single peak in the particle size distribution based on the scattering intensity measured by the dynamic light scattering method, and the D50 calculated from the particle size distribution was 188 nm and the standard deviation was 119.

### 2. Production of Infrared Absorbing Fiber

The obtained dispersion liquid containing the organic-inorganic hybrid infrared absorbing particles was mixed with a water-soluble acrylic binder resin, and a treatment liquid was prepared. The prepared treatment liquid was then impregnated with polyester fibers and dried, and an infrared absorbing fiber according to Example 1 to which the organic-inorganic hybrid infrared absorbing particles were attached, was prepared.

### 3. Production of Fiber Product

The obtained infrared absorbing fiber was cut to produce polyester staples, which were used to produce a spun yarn. A knit product according to Example 1 was obtained using the spun yarn. The solar absorption of the knit product samples was adjusted to be around 60%. The solar absorption was adjusted in the same manner in the following other Examples and Comparative Examples.

### 4. Evaluation of Fiber Product

The optical properties of the fiber product according to Example 1 were measured by the method described above. The visible light absorption and the solar absorption were calculated by "visible light absorption (%) = 100% - visible light transmittance (%)-visible light reflectance (%)" and "solar absorption (%) = 100% - solar radiation transmittance (%)- solar radiation reflectance (%)". The calculated visible light absorption and the solar absorption were 20% and 60%, respectively. When the color tone of the knit product was visually checked, it was light-colored.

### 5. Evaluation of Alkali Resistance

The fiber product according to Example 1 was immersed in 0.01 mol/l sodium hydroxide aqueous solution held at 80°C for 30 minutes, and the alkaline test was performed. After that, the optical properties were measured again.

The visible light absorption and solar radiation absorption after the alkaline test were 20% and 60%, respectively. The difference in the visible light absorption and the difference in the solar absorption were both 0%, when compared before and after the alkaline test. The evaluation results are presented in Table 1.

In other words, it was confirmed that there was no significant change in the light absorption of the infrared absorbing fiber before and after the alkaline test. Therefore, it was confirmed that the infrared absorbing fiber and the fiber product obtained in the present Example have chemical resistance, especially alkali resistance.

### [Example 2]

In the raw material mixture liquid preparation process, 4.0 g of the infrared absorbing particles obtained in the dispersion medium reduction process of Example 1, 16 g of styrene as a raw material for a coating resin, 0.8 g of 2,2'-azobisisobutyronitrile as a polymerization initiator, and 1.0 g of hexadecane as an organic solvent were mixed to form an organic phase.

Separately from the organic phase, 0.5 g of cetyltrimethylammonium chloride as an emulsifier and 80 g of water were mixed to form an aqueous phase. Except for the above points, the infrared absorbing fiber and the fiber product according to Example 2 were obtained in the same manner as in Example 1.

The content of the infrared absorbing particles in the organic-inorganic hybrid infrared absorbing particles obtained in Example 2 was 16.0 mass%.

When the raw material mixture liquid was stirred under an ice bath until the obtained mini-emulsion has a single peak in the particle size distribution based on the scattering intensity measured by the dynamic light scattering method in the stirring process, the D50 and the standard deviation were the same as in Example 1. The obtained organic-inorganic hybrid infrared absorbing particles had a single peak in the particle size distribution based on the scattering intensity measured by the dynamic light scattering method, and the D50 and the standard deviation were the same as in Example 1.

The obtained fiber product was evaluated in the same manner as in Example 1. The evaluation results are presented in Table 1.

### [Comparative Example 1]

In the dispersion liquid preparation process, a dispersion liquid containing infrared absorbing particles and a dispersion medium was prepared.

As the infrared absorbing particles, a composite tungsten oxide powder (YM-01, manufactured by Sumitomo Metal Mining Co., Ltd.) containing hexagonal cesium tungsten bronze (Cs_{0.33}WO_{z}, 2.0≤z<4.0), in which ratio of cesium (Cs) to tungsten (W) in amount of substance is Cs/W=0.33, was prepared.

As the dispersion medium, pure water was prepared.

A mixture liquid obtained by mixing 10 mass% of the infrared absorbing particles and 90 mass% of the dispersion medium was loaded into a paint shaker containing ZrO₂ beads with a diameter of 0.3mm and subjected to pulverizing and dispersing treatment for 10 hours, and a dispersion liquid of Cs_{0.33}WO_{z} particles according to Comparative Example 1 was obtained.

Pure water of the dispersion medium was removed from the dispersion liquid of Cs_{0.33}WO_{z} particles obtained in the dispersion liquid preparation process using an evaporator, and the infrared absorbing particles were collected. The collected infrared absorbing particles were to be a dry powder of Cs_{0.33}WO_{z} particles.

The crystallite diameter of the collected infrared absorbing particles, that is, Cs_{0.33}WO_{z} particles, was measured to be 16 nm.

The crystallite diameter was measured and calculated by the method described above.

The infrared absorbing fiber and the fiber product according to Comparative Example 1 were obtained by the same operation as in Example 1 except that the dispersion liquid of Cs_{0.33}WO_{z} particles according to Comparative Example 1 that was obtained in the dispersion liquid preparation process was used instead of the dispersion liquid of the organic-inorganic hybrid infrared absorbing particles according to Example 1. The obtained fiber product was evaluated in the same manner as in Example 1. The evaluation results are presented in Table 1.

### [Comparative Example 2]

In the raw material mixture liquid preparation process, 3.9 g of the infrared absorbing particles obtained in the dispersion medium reduction process of Example 1, 20.9 g of styrene as a raw material for a coating resin, 0.8 g of 2,2'-azobisisobutyronitrile as a polymerization initiator, and 2.0 g of hexadecane as an organic solvent were mixed to form an organic phase.

Separately from the organic phase, 0.5 g of cetyltrimethylammonium chloride as an emulsifier and 80 g of water were mixed to form an aqueous phase. Except for the above points, the infrared absorbing fiber and the fiber product according to Comparative Example 2 were obtained in the same manner as in Example 1.

The content of the infrared absorbing particles in the organic-inorganic hybrid infrared absorbing particles obtained in Comparative Example 2 was 12.7 mass%.

The obtained fiber product was evaluated in the same manner as in Example 1. The evaluation results are presented in Table 1.

### [Comparative Example 3]

In the raw material mixture liquid preparation process, 3.9 g of the infrared absorbing particles obtained in the dispersion medium reduction process of Example 1, 0.8 g of styrene as a raw material for a coating resin, 0.8 g of 2,2'-azobisisobutyronitrile as a polymerization initiator, and 2.0 g of hexadecane as an organic solvent were mixed to form an organic phase.

Separately from the organic phase, 0.5 g of cetyltrimethylammonium chloride as an emulsifier, and 80 g of water were mixed to form an aqueous phase.

The raw material mixture liquid was then prepared by adding the organic phase to the aqueous phase, but gelation occurred and no organic-inorganic hybrid infrared absorbing particles were obtained.

**[Table 1]**

| | BEFORE ALKALINE TEST | | AFTER ALKALINE TEST | |
|---|---|---|---|---|
| | VISIBLE LIGHT ABSORPTION (%) | SOLAR ABSORPTION (%) | VISIBLE LIGHT ABSORPTION (%) | SOLAR ABSORPTION (%) |
| EXAMPLE 1 | 20 | 60 | 20 | 60 |
| EXAMPLE 2 | 18 | 60 | 18 | 60 |
| COMPARATIVE EXAMPLE 1 | 19 | 60 | 2 | 6 |
| COMPARATIVE EXAMPLE 2 | 18 | 50 | 18 | 50 |
| COMPARATIVE EXAMPLE 3 | - | - | - | - |

From the results of the evaluation of the optical properties of the fiber products before and after the alkaline test presented in Table 1 above, it was confirmed that there was no significant change in the optical absorption properties of the fiber product before and after the test using the organic-inorganic hybrid infrared absorbing particles of each of Examples, in which the coating resin was located on at least a part of the surface of the infrared absorbing particles.

Therefore, it was confirmed that the infrared absorbing fiber using the organic-inorganic hybrid infrared absorbing particles of each of Examples and the fiber product containing the infrared absorbing fiber had excellent alkaline resistance, that is, excellent chemical resistance, and excellent infrared absorbing properties. Although only an alkaline test was performed here, these organic-inorganic hybrid infrared absorbing particles also have acid resistance because the coating resin is located on at least a part of the surface of the infrared absorbing particles.

In contrast, in the fiber product using the infrared absorbing particles of Comparative Example 1, the infrared absorbing characteristics disappeared after the alkaline test, and it was confirmed that the fiber product does not have alkaline resistance. In the fiber product using the infrared absorbing particles of Comparative Example 2, the solar absorption could not be around 60%. Further, in Comparative Example 3, gelation occurred in the raw material mixture liquid preparation process, and the organic-inorganic hybrid infrared absorbing particles and the fiber product were not prepared.

The present application claims priority to Japanese Patent Application No. 2021-165319, filed October 7, 2021, with the Japanese Patent Office, the contents of which are incorporated herein by reference in their entirety.

### Description of the Reference Numeral

- 20, 32, 40: Organic-inorganic hybrid infrared absorbing particle
- 21, 401: Infrared absorbing particle
- 22, 402: Coating resin
- 221: Resin capsule
- 30: Infrared absorbing fiber
- 31: Fiber
- 31A: Surface
- 31B: Interior

## Claims

1. An infrared absorbing fiber comprising:
a fiber; and
organic-inorganic hybrid infrared absorbing particles, wherein
the organic-inorganic hybrid infrared absorbing particles include infrared absorbing particles and a coating resin that covers at least a part of a surface of the infrared absorbing particles,
a content of the infrared absorbing particles in the organic-inorganic hybrid infrared absorbing particles is 15 mass% or more and 55 mass% or less, and
the organic-inorganic hybrid infrared absorbing particles are located in one or more parts selected from an interior of the fiber and a surface of the fiber.

2. The infrared absorbing fiber according to claim 1, wherein the coating resin contains one or more resins selected from polyester resin, polycarbonate resin, acrylic resin, polystyrene resin, polyamide resin, vinyl chloride resin, olefin resin, fluororesin, polyvinyl acetate resin, polyurethane resin, acrylonitrile butadiene styrene resin, polyvinyl acetal resin, acrylonitrile styrene copolymer resin, ethylene-vinyl acetate copolymer resin, phenol resin, epoxy resin, melamine resin, urea resin, unsaturated polyester resin, alkyd resin, polyimide resin, and silicone resin.

3. The infrared absorbing fiber according to claim 1 or 2, wherein
the coating resin is a photocurable resin, and
the photocurable resin contains a resin that cures by irradiation with any of ultraviolet, visible, or infrared light.

4. The infrared absorbing fiber according to any one of claims 1 to 3,
wherein the infrared absorbing particles contain one or more oxides selected from a tungsten oxide represented by a general formula W_{y}O_{z} where W is tungsten and O is oxygen and z/y is 2.2 or more and 2.999 or less and a composite tungsten oxide represented by a general formula MₓW_{y}O_{z} where an element M is one or more elements selected from H, He, Li, Na, K, Rb, Cs, Fr, Be, Mg, Ca, Sr, Ba, Ra, Sc, Y, La, Ce, Pr, Nd, Pm, Sm, Eu, Gd, Tb, Dy, Ho, Er, Tm, Yb, Lu, Ti, Zr, Hf, V, Nb, Ta, Cr, Mo, Mn, Re, Fe, Ru, Os, Co, Rh, Ir, Ni, Pd, Pt, Cu, Ag, Au, Zn, Cd, B, Al, Ga, In, Tl, Si, Ge, Sn, Pb, P, Sb, Bi, S, Se, Te, F, Br, and I; x/y is 0.001 or more and 1 or less; and z/y is 2.0 or more and less than 4.0.

5. The infrared absorbing fiber according to any one of claims 1 to 4, wherein the fiber includes one or more fibers selected from a synthetic fiber, a semisynthetic fiber, a natural fiber, a recycled fiber, and an inorganic fiber.

6. The infrared absorbing fiber according to claim 5, wherein the synthetic fiber includes one or more fibers selected from a polyurethane fiber, a polyamide fiber, an acrylic fiber, a polyester fiber, a polyolefin fiber, a polyvinyl alcohol fiber, a polyvinylidene chloride fiber, a polyvinyl chloride fiber, and a polyether ester fiber.

7. The infrared absorbing fiber according to claim 5 or 6, wherein the semisynthetic fiber includes one or more fibers selected from a cellulose fiber, a protein fiber, chlorinated rubber, and hydrochlorinated rubber.

8. The infrared absorbing fiber according to any one of claims 5 to 7, wherein the natural fiber includes one or more fibers selected from a plant fiber, an animal fiber, and a mineral fiber.

9. The infrared absorbing fiber according to any one of claims 5 to 8, wherein the recycled fiber includes one or more fibers selected from a cellulose fiber, a protein fiber, an algin fiber, a rubber fiber, a chitin fiber, and a mannan fiber.

10. The infrared absorbing fiber according to any one of claims 5 to 9, wherein the inorganic fiber includes one or more fibers selected from a metal fiber, a carbon fiber, and a silicate fiber.

11. A fiber product comprising the infrared absorbing fiber of any one of claims 1 to 10.

## Amended claims

### Amended claims under Art. 19.1 PCT

1. (After Amendment) An infrared absorbing fiber comprising:
a fiber; and
organic-inorganic hybrid infrared absorbing particles, wherein
the organic-inorganic hybrid infrared absorbing particles include infrared absorbing particles and a coating resin that covers at least a part of a surface of the infrared absorbing particles,
a content of the infrared absorbing particles in the organic-inorganic hybrid infrared absorbing particles is 15 mass% or more and 55 mass% or less,
the organic-inorganic hybrid infrared absorbing particles have a single peak in a particle size distribution based on a scattering intensity measured by a dynamic light scattering method, and
the organic-inorganic hybrid infrared absorbing particles are located in one or more parts selected from an interior of the fiber and a surface of the fiber.

2. The infrared absorbing fiber according to claim 1, wherein the coating resin contains one or more resins selected from polyester resin, polycarbonate resin, acrylic resin, polystyrene resin, polyamide resin, vinyl chloride resin, olefin resin, fluororesin, polyvinyl acetate resin, polyurethane resin, acrylonitrile butadiene styrene resin, polyvinyl acetal resin, acrylonitrile styrene copolymer resin, ethylene-vinyl acetate copolymer resin, phenol resin, epoxy resin, melamine resin, urea resin, unsaturated polyester resin, alkyd resin, polyimide resin, and silicone resin.

3. The infrared absorbing fiber according to claim 1 or 2, wherein
the coating resin is a photocurable resin, and
the photocurable resin contains a resin that cures by irradiation with any of ultraviolet, visible, or infrared light.

4. The infrared absorbing fiber according to any one of claims 1 to 3,
wherein the infrared absorbing particles contain one or more oxides selected from a tungsten oxide represented by a general formula W_{y}O_{z} where W is tungsten and O is oxygen and z/y is 2.2 or more and 2.999 or less and a composite tungsten oxide represented by a general formula MₓW_{y}O_{z} where an element M is one or more elements selected from H, He, Li, Na, K, Rb, Cs, Fr, Be, Mg, Ca, Sr, Ba, Ra, Sc, Y, La, Ce, Pr, Nd, Pm, Sm, Eu, Gd, Tb, Dy, Ho, Er, Tm, Yb, Lu, Ti, Zr, Hf, V, Nb, Ta, Cr, Mo, Mn, Re, Fe, Ru, Os, Co, Rh, Ir, Ni, Pd, Pt, Cu, Ag, Au, Zn, Cd, B, Al, Ga, In, Tl, Si, Ge, Sn, Pb, P, Sb, Bi, S, Se, Te, F, Br, and I; x/y is 0.001 or more and 1 or less; and z/y is 2.0 or more and less than 4.0.

5. The infrared absorbing fiber according to any one of claims 1 to 4, wherein the fiber includes one or more fibers selected from a synthetic fiber, a semisynthetic fiber, a natural fiber, a recycled fiber, and an inorganic fiber.

6. The infrared absorbing fiber according to claim 5, wherein the synthetic fiber includes one or more fibers selected from a polyurethane fiber, a polyamide fiber, an acrylic fiber, a polyester fiber, a polyolefin fiber, a polyvinyl alcohol fiber, a polyvinylidene chloride fiber, a polyvinyl chloride fiber, and a polyether ester fiber.

7. The infrared absorbing fiber according to claim 5 or 6, wherein the semisynthetic fiber includes one or more fibers selected from a cellulose fiber, a protein fiber, chlorinated rubber, and hydrochlorinated rubber.

8. The infrared absorbing fiber according to any one of claims 5 to 7, wherein the natural fiber includes one or more fibers selected from a plant fiber, an animal fiber, and a mineral fiber.

9. The infrared absorbing fiber according to any one of claims 5 to 8, wherein the recycled fiber includes one or more fibers selected from a cellulose fiber, a protein fiber, an algin fiber, a rubber fiber, a chitin fiber, and a mannan fiber.

10. The infrared absorbing fiber according to any one of claims 5 to 9, wherein the inorganic fiber includes one or more fibers selected from a metal fiber, a carbon fiber, and a silicate fiber.

11. A fiber product comprising the infrared absorbing fiber of any one of claims 1 to 10.

Statement under Art. 19.1 PCT

Content of Amendment
   The limitation "the organic-inorganic hybrid infrared absorbing particles have a single peak in a particle size distribution based on a scattering intensity measured by a dynamic light scattering method" is added to claim 1.
Explanation
   In none of Document 1 (JP 2003-54947 A), Document 2 (WO 2019/021992 A1), Document 3 (WO 2019/160109 A1), Document 4 (WO 2021/039474 A1), and Document 5 (JP 2019-131727 A) described or suggested that the organic-inorganic hybrid infrared absorbing particles have a single peak in a particle size distribution based on a scattering intensity measured by a dynamic light scattering method.
